# EUROPÄISCHE PATENTSCHRIFT

(11) **EP 3 824 338 B1**
(45) Veröffentlichungstag und Bekanntmachung des Hinweises auf die Patenterteilung: **02.09.2026**
(21) Anmeldenummer: 19745067.9
(22) Anmeldetag: 18.07.2019
(51) Int. Cl.: G02B 27/12, G02B 27/10, H01S 3/13, H01S 3/23, G02B 3/00, G02B 3/08

(54) **VORRICHTUNG, LASERSYSTEM UND VERFAHREN ZUR KOMBINATION VON KOHÄRENTEN LASERSTRAHLEN**
DEVICE, LASER SYSTEM AND METHOD FOR COMBINING COHERENT LASER BEAMS
DISPOSITIF, SYSTÈME LASER ET PROCÉDÉ POUR LA COMBINAISON DE FAISCEAUX LASER COHÉRENTS

(30) Priorität: 18.07.2018 DE 102018211971
(43) Veröffentlichungstag der Anmeldung: 26.05.2021
(73) Patentinhaber: TRUMPF Laser SE, 78713 Schramberg (DE)
(72) Erfinder: TILLKORN, Christoph, 78667 Villingendorf (DE); FLAMM, Daniel, 70806 Kornwestheim (DE); JANSEN, Florian, 78054 Villingen-Schwenningen (DE); BECK, Torsten, 70178 Stuttgart (DE); OTTO, Hans-Jürgen, 78655 Dunningen OT Seedorf (DE); HELLSTERN, Julian, 78628 Rottweil (DE); HEIMES, Andreas, 71272 Renningen (DE); PROSSOTOWICZ, Maike, 78733 Aichhalden (DE)
(74) Vertreter: Trumpf Patentabteilung
(86) Internationale Anmeldenummer: PCT/EP2019/069324
(87) Internationale Veröffentlichungsnummer: WO 2020/016336

(56) Entgegenhaltungen:
- US-A1- 2012 236 212
- US-A1- 2017 201 063
- US-B1- 8 248 700
- YU C X ET AL: "Coherent beam combining of large number of PM fibres in 2-D fibre array", ELECTRONICS LETTERS, THE INSTITUTION OF ENGINEERING AND TECHNOLOGY, GB, vol. 42, no. 18, 31 August 2006 (2006-08-31), pages 1024 - 1025, XP006027225, ISSN: 0013-5194, DOI: 10.1049/EL:20061938

## Beschreibung

Die Erfindung betrifft ein Lasersystem gemäß der unabhängigen Ansprüche 1, 21 und 22. Die Erfindung betrifft ferner ein Verfahren zum Kombinieren von kohärenten Laserstrahlen gemäß der unabhängigen Ansprüche 23, 26 und 27.

Unter "kohärenten Laserstrahlen" wird im Sinne dieser Anmeldung eine zeitliche Kohärenz der Laserstrahlen zueinander verstanden. Im Allgemeinen können die Laserstrahlen einen verminderten Grad an räumlicher Kohärenz aufweisen, d.h. die Laserstrahlen können räumlich partiell kohärent sein, d.h. es handelt sich nicht zwingend um Single-Mode-Laserstrahlen. Beispielsweise können die Laserstahlen von Multimode-Quellen erzeugt werden und z.B. einen höhermodigen Gauß-Mode, z.B. ein Laguerre-Gauß-Mode, eine Hermite-Gauß-Mode oder Superpositionen davon bilden. Bevorzugt sind die Laserstrahlen jedoch sowohl zeitlich als auch räumlich kohärent.

Bei der Strahlkombination wird eine Mehrzahl von Laserstrahlen zu einem kombinierten Laserstrahl überlagert, der eine entsprechend höhere Leistung aufweist. Bei der kohärenten "tiled aperture"-Strahlkombination, auch Seite-an-Seite-Strahlkombination genannt, wird der Strahlquerschnitt des kombinierten Laserstrahls vergrößert, aber die Divergenz reduziert, was in der Regel nicht ohne einen Verlust an Leistung oder Strahlqualität möglich ist. Bei der kohärenten "filled aperture"-Strahlkombination wird eine Mehrzahl von Laserstrahlen zu einem kombinierten Laserstrahl überlagert, der typischerweise denselben Strahlquerschnitt und idealerweise dieselbe Divergenz wie ein einzelner Laserstrahl aufweist. Eine solche Strahlkombination kann - annähernd ohne Verlust an Strahlqualität - diffraktiv, interferometrisch oder über eine Polarisationskopplung erfolgen.

In der US 2017/0201063 A1 ist ein System zur Phasenanpassung einer Anzahl M von Laserquellen beschrieben, die in einer periodischen räumlichen Konfiguration angeordnet sind. Das System weist Mittel zum Kollimieren und zum Ausrichten der Anzahl M von Laserstrahlen auf ein kombinierendes diffraktives optisches Element auf, das ein Phasengitter umfasst. Das diffraktive optische Element ist in einer Objektebene einer Fourier-Linse angeordnet. Das System weist auch Mittel zur Phasenanpassung der Laserquellen auf Grundlage eines negativen Feedback-Signals auf, das von den kombinierten Laserstrahlen herrührt.

Aus der US 7,924,894 B2 ist ein Hochleistungs-Lasersystem bekannt geworden, welches einen Master-Oszillator sowie eine Mehrzahl von Faserlaser-Verstärkern zur Erzeugung von Ausgangs-Beamlets aufweist. Ein diffraktives optisches Element kombiniert die Ausgangs-Beamlets zu einem kombinierten Ausgangsstrahl. Eine Regelungseinrichtung dient dazu, auf die Kombination der Ausgangs-Beamlets zurückzuführende Fehler zu minimieren, welche die Qualität des kombinierten Ausgangsstrahls reduzieren. Die Phase der Beamlets wird mit Hilfe von Phasen-Modulatoren in Abhängigkeit von einem Fehlersignal eingestellt.

In der US 8,248,700 B1 sind Systeme und Verfahren zur kohärenten Strahlkombination beschrieben. Das System weist ein Array von kohärenten Laser-Emittern auf, die ein Array von Ausgangs-Strahlen erzeugen, die von einem Array von Kollimations-Linsen kollimiert werden. Die kollimierten Ausgangs-Strahlen werden von einer Linse in eine Fokusebene fokussiert, in der ein Phasen-Schirm angeordnet ist, um aus dem Array von Ausgangs-Strahlen einen oder mehrere kohärent überlagerte Strahlen zu erzeugen, die einer Phasen-Kombination des Arrays von Ausgangs-Strahlen entsprechen. Bei dem Phasen-Schirm kann es sich um ein diffraktives optisches Element handeln.

YU C X ET AL: "Coherent beam combining of large number of PM fibres in 2-D fibre array", ELECTRONICS LETTERS, THE INSTITUTION OF ENGINEERING AND TECHNOLOGY, GB, Bd. 42, Nr. 18, 31. August 2006 (2006-08-31), Seiten 1024-1025, ISSN: 0013-5194, DOI: 10.1049/EL:20061938, offenbart eine Vorrichtung zum Kombinieren von kohärenten Laserstrahlen, die Phasen-Einstelleinrichtungen und eine Mikrolinsenanordnung aufweist.

### Aufgabe der Erfindung

Der Erfindung liegt die Aufgabe zugrunde, ein Lasersystem und ein zugehöriges Verfahren bereitzustellen, welche es ermöglichen, die Strahlqualität eines jeweiligen einzelnen Laserstrahls in dem mindestens einen kombinierten kohärenten Laserstrahl nahezu vollständig zu erhalten.

### Gegenstand der Erfindung

Diese Aufgabe wird erfindungsgemäß durch ein Lasersystem nach Anspruch 1, 21 und 22 gelöst.

Die Erfinder haben erkannt, dass bei einer geeigneten Festlegung der (relativen) Phase bzw. der Phasenunterschiede zwischen den kohärenten Laserstrahlen eine Mikrolinsenanordnung als Strahlkombinationseinrichtung zur kohärenten Kombination der Mehrzahl von kohärenten Laserstrahlen zu mindestens einem kombinierten Laserstrahl mit hoher Strahlqualität verwendet werden kann. Zwar ist es grundsätzlich bekannt, eine Mikrolinsenanordnung bzw. einen abbildenden Homogenisierer zur Homogenisierung von Strahlung, insbesondere zur Homogenisierung eines Laser-Strahls, zu verwenden, erfindungsgemäß wird die Mikrolinsenanordnung jedoch zur kohärenten Kombination einer Mehrzahl von Laserstrahlen verwendet. Bei einer geeigneten Auslegung der Mikrolinsenanordnung, beispielsweise einer geeigneten Wahl der Brennweiten der Mikrolinsen der Mikrolinsen-Arrays, sowie einer geeigneten Anpassung der Phasenfront der Laserstrahlen, die auf die Mikrolinsenanordnung eingestrahlt werden, insbesondere durch eine geeignete Wahl der (relativen) Phasen δφₙ der kohärenten Laserstrahlen kann zudem eine hohe Effizienz bei der Kopplung realisiert werden.

Es ist zwar grundsätzlich möglich, die Phasenanpassung ausschließlich durch eine geeignete Einkoppeloptik zur Einkopplung der kohärenten Laserstrahlen in die Mikrolinsenanordnung, d.h. durch eines oder mehrere geeignet ausgelegte optische Elemente zu realisieren. In der Praxis werden typischerweise die Phasen-Einstelleinrichtungen zur individuellen Einstellung der (relativen) Phasen δφₙ der kohärenten Laserstrahlen verwendet. Zusätzlich kann in Kombination eine geeignete Einkoppeloptik verwendet werden, um die Phasenanpassung vorzunehmen. Dies ist günstig, da die Phasen-Einstelleinrichtungen in der Regel ohnehin benötigt werden, um die Phasen der kohärenten Laserstrahlen zu korrigieren bzw. zu regeln, beispielsweise um temperaturbedingte Einflüsse auf die Vorrichtung zu kompensieren.

Die Phasen-Einstelleinrichtungen dienen zur Einstellung der jeweiligen Phase der kohärenten Laserstrahlen typischerweise vor deren Austritt an einer Emissionsfläche, d.h. bevor diese in Freistrahlpropagation auf die Mikrolinsenanordnung treffen. Für die Realisierung der Phasen-Einstelleinrichtungen, die typischerweise zur Einstellung einer variablen Phasenverzögerung ausgebildet sind, besteht eine Vielzahl von Möglichkeiten: Beispielsweise kann es sich bei den Phasen-Einstelleinrichtungen um Modulatoren in Form von EOMs (elektro-optische Modulatoren), SLMs (Spatial Light Modulators), optische Verzögerungsstrecken in Form von Spiegelanordnungen, oder dergleichen handeln. Für den Fall, dass die kohärenten Laserstrahlen vor der Emission an einer Emissionsfläche in einer Faser geführt werden, kann für die Phasen-Einstellung z.B. mittels Piezo-Stellelementen eine Zugspannung auf die Faser aufgebracht werden, eine Temperatur-Beeinflussung der Faser vorgenommen werden, etc.

Für den Fall, dass die kohärenten Laserstrahlen vor der Emission an einer Emissionsfläche in einem Verstärkungsmedium geführt und optisch verstärkt werden, kann die spezifische Verstärkungscharakteristik des jeweiligen optischen Verstärkers angepasst werden und somit eine Phasenbeziehung zwischen den einzelnen Kanälen bzw. den einzelnen Laserstrahlen eingestellt werden. Die Verstärkungscharakteristik kann dabei die erzielte Gesamtverstärkung (Gain) und/oder erzielte absolute Ausgangsleistung der kohärenten Einzelstrahlen darstellen. Der Grund für eine unterschiedliche Phasenbeziehung kann dabei die unterschiedliche Anzahl von angeregten laseraktiven Ionen im Verstärkungsmedium sein oder aber unterschiedliche optische Intensitätsverläufe, welche durch optische Nichtlinearität entweder im Verstärkermedium selber oder in einem weiteren optischen Element zu einer Änderung der Phasenlage führen.

Bei einem Aspekt der Erfindung erfüllen die kohärenten Laserstrahlen und die Mikrolinsenanordnung die folgende Gleichung: $N = {p}^{2} / \left({λ}_{L} {f}_{E}\right)$ wobei N die Anzahl der kohärenten Laserstrahlen für die Kombination, p einen Rasterabstand der Mikrolinsen eines jeweiligen Mikrolinsen-Arrays, λ_{L} die Laserwellenlänge der kohärenten Laserstrahlen und f_{E} die (effektive) Brennweite der Mikrolinsenanordnung bezeichnen. Im einfachsten Fall weist die Mikrolinsenanordnung zwei Mikrolinsenarrays mit identischer Brennweite auf, die im Abstand ihrer Brennweiten zueinander angeordnet sind. In diesem Fall stimmt die Brennweite der Mikrolinsenanordnung mit der (gemeinsamen) Brennweite der beiden Mikrolinsen-Arrays überein.

Die Erfinder haben erkannt, dass bei der Kombination zu dem kombinierten Laserstrahl die Strahlqualität eines einzelnen kohärenten Laserstrahls nahezu vollständig erhalten bleibt, wenn obige Gleichung (1) erfüllt ist. Hierbei wird ausgenutzt, dass eine Mikrolinsenanordnung bzw. ein abbildender Homogenisierer, der mit einem kohärenten, kollimierten Laserstrahl bestrahlt wird, für den Fall, dass die Gleichung (1) erfüllt ist, ein Beugungsmuster mit N Beugungs-Spots gleicher Intensität erzeugt, vgl. den Artikel von M. Zimmermann et al. "Refractive Micro-optics for Multi-spot and Multi-line Generation", Proceedings of LPM2008-the 9th International Symposium on Laser Precision Microfabrication. Die Erfinder schlagen vor, den Strahlweg durch den abbildenden Homogenisierer umzukehren und an den Positionen, an denen in dem zitierten Artikel die Beugungs-Spots erzeugt werden, die Emissionsflächen für die Emission der kohärenten Laserstrahlen anzuordnen bzw. die kohärenten Laserstrahlen in Richtung auf die Mikrolinsenanordnung auszusenden. Weisen die kohärenten Laserstrahlen eine (annähernd) gleiche Intensität auf, wird bei der Umkehrung der Strahlrichtung ein kombinierter, kohärenter Laserstrahl hoher Strahlqualität erzeugt.

Es versteht sich, dass die Gleichung (1) in der Praxis nicht exakt eingehalten werden kann. Für den Fall, dass von der Gleichung (1) abgewichen wird, verschlechtert sich die Strahlqualität des überlagerten Laserstrahls.

Bei einer Ausführungsform weist die Mikrolinsenanordnung mindestens drei Mikrolinsen-Arrays auf und ist zur Einstellung ihrer (effektiven) Brennweite f_{E} ausgebildet. Die Einstellung der Brennweite der Mikrolinsenanordnung ist erforderlich, wenn die Anzahl N der kohärenten Laserstrahlen, die für die Kombination verwendet werden, verändert wird und weiterhin die Gleichung (1) erfüllt sein soll, da die anderen Parameter in Gleichung (1), d.h. die Laserwellenlänge λ_{L} und der Rasterabstand p der Mikrolinsen, nicht ohne weiteres verändert werden können.

Die effektive Brennweite f_{E} der Mikrolinsenanordnung bezieht sich auf ein Strahlbündel, welches jeweils eine Mikrolinse je Mikrolinsen-Array im Strahlpfad (entsprechend einer Sub-Apertur) durchläuft. Eine Mikrolinsenanordnung, die als Strahlkombinationseinrichtung in der erfindungsgemäßen Vorrichtung verwendet werden kann, weist bezogen auf ein Strahlbündel zu jeweils einer Mikrolinse je Mikrolinsen-Array in der Schreibweise der Matrizenoptik, also als Abbildungsmatrix $\left(\begin{matrix}A & B \\ C & D\end{matrix}\right)$, typischerweise folgende Eigenschaften auf: A=0; |B|=f_{E}. Weiterhin gilt meist auch D<1 (für einen im Wesentlichen kollimierten Austrittsstrahl); C ergibt sich dann abhängig von A, B, und D. Die Verwendung von mindestens drei Mikrolinsen-Arrays ist erforderlich, um die zweite Bedingung |B|= f_{E} für variables f_{E} zu erfüllen.

Im einfachsten Fall wird ein jeweiliges Mikrolinsen-Array der Mikrolinsenanordnung durch ein eigenes Multilinsen-Array-Bauteil realisiert. Es ist aber auch möglich, dass mehrere Mikrolinsen-Arrays im Strahlpfad durch ein einziges Mikrolinsenarray-Bauteil realisiert werden, indem der Strahlpfad dieses Mikrolinsenarray-Bauteil entsprechend mehrfach durchläuft, beispielsweise weil der Strahlpfad an einem reflektierenden optischen Element umgelenkt wird.

Für die Einstellung der effektiven Brennweite der Mikrolinsenanordnung bestehen verschiedene Möglichkeiten:
Bei einer Weiterbildung ist die Mikrolinsenanordnung ausgebildet, zur Einstellung ihrer (effektiven) Brennweite einen (optischen) Abstand zwischen mindestens einem ersten Mikrolinsen-Array und einem zweiten Mikrolinsen-Array zu verändern. Für zwei (dünne) (Mikro-)Linsen kann beispielsweise eine effektive Brennweite f_{E} aus den Brennweiten der Einzellinsen f₁ₐ, f₂ₐ und dem Abstand ds der Linsen bestimmt werden gemäß dem Grundzusammenhang: $\frac{1}{{f}_{E}} = \frac{1}{{f}_{1 a}} + \frac{1}{{f}_{2 a}} - \frac{ds}{{f}_{1 a} ∗ {f}_{2 a}}$

Aus diesen Grundzusammenhang kann (nötigenfalls iterativ) die effektive Brennweite f_{E} einer Mikrolinsenanordnung mit einer beliebigen Anzahl von Mikrolinsen-Arrays (in der Regel drei oder vier Mikrolinsen-Arrays) bestimmt werden. Da die Veränderung der Anzahl der kohärenten Laserstrahlen, die zur Kombination verwendet werden, in der Regel nicht zeitkritisch ist, kann die Einstellung bzw. die Variation der effektiven Brennweite der Mikrolinsenanordnung ggf. manuell durchgeführt werden, indem die die Mikrolinsen-Arrays an vorgegebene Verstellpositionen bewegt werden. Gegebenenfalls kann die Vorrichtung eine motorisierte Verstellmechanik und eine elektronische Steuereinrichtung aufweisen, um die verschiedenen Verstellpositionen automatisiert anzufahren. Die Verstellmechanik kann einen Schlitten umfassen, auf dem ein Mikrolinsen-Array bzw. ein Mikrolinsenarray-Bauteil oder wenigstens zwei Mikrolinsenarray-Bauteile in festem Abstand angeordnet sind. Der Schlitten kann gegenüber wenigstens einem weiteren Mikrolinsenarray-Bauteil, insbesondere gegenüber wenigstens zwei Mikrolinsenarray-Bauteilen, entlang der Strahlausbreitungsrichtung verfahrbar ausgebildet sein. Beispielsweise können ein im Strahlpfad erstes und drittes Mikrolinsen-Array ortsfest und ein im Strahlpfad zweites und viertes Mikrolinsen-Array auf dem verfahrbaren Schlitten angeordnet sein, oder umgekehrt.

Für die Kombination der kohärenten Laserstrahlen zu einem kombinierten Laserstrahl ist es typischerweise erforderlich bzw. günstig, dass benachbarte kohärente Laserstrahlen mit einer vorgegebenen Winkeldifferenz δθ in die Mikrolinsenanordnung eingekoppelt werden, für die gilt: δθ = λ_{L} / p, wobei λ_{L} die Laserwellenlänge und p einen (identischen) Rasterabstand der Mikrolinsen eines jeweiligen Mikrolinsen-Arrays bezeichnen. Um diese Bedingung zu erfüllen, können die Emissionsflächen, aus denen die kohärenten Laserstrahlen austreten, unter der jeweiligen Winkeldifferenz δθ zueinander ausgerichtet werden und beispielsweise auf einem Kreisbogen angeordnet sein. Eine Fokussierung der kohärenten Laserstrahlen kann in diesem Fall beispielsweise mit Hilfe von Einzellinsen erfolgen, die im jeweiligen Strahlweg eines der kohärenten Laserstrahlen angeordnet sind, es kann ggf. aber auch auf das Vorsehen solcher Linsen verzichtet werden.

Bei einer weiteren Ausführungsform weist die Vorrichtung eine Bewegungseinrichtung zur Erzeugung eines bevorzugt einstellbaren lateralen Versatzes zwischen mindestens einem ersten Mikrolinsen-Array und mindestens einem zweiten Mikrolinsen-Array der Mikrolinsenanordnung auf. Durch die Bewegungseinrichtung werden die Raster, in denen die Mikrolinsen der beiden Mikrolinsen-Arrays angeordnet sind, lateral, d.h. senkrecht zur Ausbreitungsrichtung des kombinierten Laserstrahls bzw. zur optischen Achse verschoben, entlang derer die Mikrolinsen-Arrays zueinander beabstandet angeordnet sind. Die laterale Verschiebung erfolgt in der Regel um ein nicht ganzzahliges Vielfaches des Rasterabstands der Mikrolinsen, so dass in Ausbreitungsrichtung aufeinander folgende Mikrolinsen bzw. Sub-Aperturen lateral zueinander versetzt sind. In Abhängigkeit von der Größe bzw. vom Betrag des lateralen Versatzes kann eine gezielte Ablenkung des kombinierten Laserstrahls oder eine Strahlteilung zur Bildung von zwei oder mehr kombinierten Laserstrahlen erfolgen, die in der Regel dieselbe Leistung aufweisen. Die Laserenergie und die Strahlqualität der einzelnen kohärenten Laserstrahlen können hierbei im Wesentlichen erhalten bleiben. Durch den lateralen Versatz können die Optikparameter, die zur Bildung eines einzelnen kombinierten Laserstrahls dienen, so verändert werden, dass eine Kombination zu mehreren wohldefinierten Bündeln (Strahlteilung) von Laserstrahlen mit gleichverteilter Leistung entsteht. Alternativ oder zusätzlich kann bei der Kombination ein einzelner Laserstrahl gebildet werden, der zur optischen Achse parallel versetzt propagiert (Strahlablenkung), sofern die Winkelverteilung des Fernfelds mit einer Linse oder dergleichen abgebildet und hierbei in eine Ortsverteilung umgewandelt wird. Dieses Verfahren zur Strahlteilung und/oder zur Strahlablenkung kann bei Regelraten von << 1 kHz realisiert werden.

Die Bewegungseinrichtung dient typischerweise dazu, eines der Mikrolinsen-Arrays lateral zu verschieben. Die Bewegungseinrichtung kann zur Dejustage bzw. zur Verschiebung des mindestens einen Mikrolinsen-Arrays beispielsweise ein Piezoelement, eine Voice Coil, eine mechanische Einrichtung ggf. in Form einer Nockenwelle, etc. aufweisen oder aus einem solchen Bauteil gebildet sein.

Bei einer Weiterbildung weisen das erste und das zweite Mikrolinsen-Array zur Bildung von zwei kombinierten Laserstrahlen einen lateralen Versatz Δ auf, für den gilt: $Δ = \pm p / \left(2 N\right) ,$ wobei N die Anzahl der kohärenten Laserstrahlen und p einen Rasterabstand der Mikrolinsen eines jeweiligen Mikrolinsen-Arrays bezeichnen:

Die Mikrolinsen des ersten Mikrolinsen-Arrays sind in diesem Fall um den Betrag Δ in einer Richtung (z.B. X-Richtung) zu den Mikrolinsen des zweiten Mikrolinsen-Arrays versetzt. Die beiden kombinierten Laserstrahlen bzw. die beiden Beugungsordnungen, in welche diese gebeugt werden, sind ebenfalls in X-Richtung versetzt.

Bei einer weiteren Weiterbildung weisen das erste und das zweite Mikrolinsen-Array zur Kombination einer geraden Anzahl N von kohärenten Laserstrahlen zu einem kombinierten Laserstrahl einen lateralen Versatz Δ auf, für den gilt: $Δ = \pm p / \left(2 N+1\right) ,$ wobei N die Anzahl der kohärenten Laserstrahlen und p einen Rasterabstand der Mikrolinsen eines jeweiligen Mikrolinsen-Arrays bezeichnen, wobei für einen bevorzugt einstellbaren Abstand d zwischen dem ersten Mikrolinsen-Array und dem zweiten Mikrolinsen-Array gilt: $d = {p}^{2} / \left(N {λ}_{L}\right) ,$ wobei λ_{L} die Laserwellenlänge bezeichnet. Der Abstand d zwischen den beiden lateral versetzten Mikrolinsen-Arrays kann in der Regel auf die weiter oben in Zusammenhang mit der Einstellung der effektiven Brennweite f_{E} der Mikrolinsenanordnung beschriebene Weise mittels einer motorischen Verstellmechanik eingestellt werden, es ist aber auch möglich, dass der Abstand d zwischen den beiden Mikrolinsen-Arrays konstant ist und nicht verändert werden kann.

Bei einer weiteren Weiterbildung weisen das erste und das zweite Mikrolinsen-Array zur Bildung eines in eine von der Nullten verschiedenen Beugungsordnung B gebeugten kombinierten Laserstrahls einen lateralen Versatz Δ auf, für den gilt: $Δ = p / N B ,$ wobei N die Anzahl der kohärenten Laserstrahlen und p einen Rasterabstand der Mikrolinsen eines jeweiligen Mikrolinsen-Arrays bezeichnen. Die Beugungsordnung B nimmt ganzzahlige, von Null verschiedene Werte an, d.h. B = ± 1, ± 2, .... Durch den lateralen Versatz Δ kann in diesem Fall eine Ablenkung des kombinierten Laserstrahls in eine bestimmte Beugungsordnung, d.h. unter einem vorgegebenen, dieser Beugungsordnung entsprechenden Winkel erfolgen. Die Intensität des gebeugten kombinierten Laserstrahls nimmt in Abhängigkeit von der Beugungsordnung ab, beispielsweise um ca. 3% bei der ±1. Beugungsordnung und um ca. 10% bei der ±2. Beugungsordnung, d.h. auch in diesem Fall ist die Effizienz bei der Strahlkombination hoch.

Für den Fall, dass eine Mehrzahl von Laserstrahlen zweidimensional zu einem gemeinsamen Laserstrahl kombiniert werden soll und die Mikrolinsenanordnung zu diesem Zweck zwei Paare von eindimensionalen, direkt hintereinander angeordneten gekreuzten Mikrolinsen-Arrays aufweist, kann mittels der Bewegungseinrichtung ein getrennt einstellbarer lateraler Versatz der Mikrolinsen eines jeweiligen eindimensionalen Mikrolinsen-Arrays in zwei unterschiedlichen, beispielsweise senkrechten Richtungen (X, Y) eingestellt werden.

Für den Fall, dass für die zweidimensionale Kombination zweidimensional strukturierte Mikrolinsen-Arrays verwendet werden, ist keine unabhängige Einstellung des lateralen Versatzes in zwei Richtungen möglich. Wird ein solches zweidimensional strukturiertes Mikrolinsen-Array in einer Richtung (z.B. X-Richtung) lateral versetzt, wird der kombinierte Laserstrahl auch in der zweiten Richtung (z.B. Y-Richtung) abgelenkt bzw. es werden an Stelle von zwei kombinierten Laserstrahlen vier kombinierte Laserstrahlen gebildet.

Bei einer weiteren Ausführungsform weist die Vorrichtung eine Einkoppeloptik zur Einkopplung der kohärenten Laserstrahlen in die Mikrolinsenanordnung auf, wobei die Einkoppeloptik bevorzugt ausgebildet ist, benachbarte kohärente Laserstrahlen mit einer vorgegebenen Winkeldifferenz δθ in die Mikrolinsenanordnung einzukoppeln, für die gilt: δθ = λ_{L} / p, wobei λ_{L} die Laserwellenlänge und p einen Rasterabstand der Mikrolinsen eines jeweiligen Mikrolinsen-Arrays bezeichnen. In diesem Fall wird eine Einkoppeloptik verwendet, die zwischen den Emissionsflächen, aus denen die kohärenten Laserstrahlen austreten, und der Mikrolinsenanordnung angeordnet ist. Die Einkoppeloptik ist nicht zwingend erforderlich, kann aber z.B. beim Einrichten der Vorrichtung günstig sein. Insbesondere kann die Einkoppeloptik dazu verwendet werden, die Bedingung an die Winkeldifferenz δθ zu erfüllen, ohne dass zu diesem Zweck die Strahlaustrittsrichtungen der kohärenten Laserstrahlen aus den Emitterflächen unter einem Winkel zueinander ausgerichtet werden müssen. Beispielsweise können in diesem Fall die Emitterflächen auf einer Linie angeordnet sein, d.h. die Strahlaustrittsrichtungen bzw. die Poynting-Vektoren der kohärenten Laserstrahlen sind parallel zueinander ausgerichtet. Die Verwendung bzw. die Auslegung der Einkoppeloptik und die Anordnung der Emitterflächen hängen von den Rahmenbedingungen, beispielsweise von der verwendeten Laserquelle ab. Für den Fall, dass die Emitterflächen die Stirnseiten von parallel verlaufenden Fasern bilden, bietet sich beispielsweise die Verwendung einer Einkoppeloptik an.

Bei einer Weiterbildung weist die Einkoppeloptik mindestens eine Fokussiereinrichtung, insbesondere mindestens eine Fokussierlinse, zur Fokussierung der Mehrzahl von kohärenten Laserstrahlen auf die Mikrolinsenanordnung auf. Die Verwendung einer Fokussierlinse, die im Wesentlichen im Abstand ihrer Brennweite von der Mikrolinsenanordnung angeordnet ist (Fourier-Linse) hat sich als günstig erwiesen, um die Bedingung an die Winkeldifferenz δθ einzuhalten, sofern die Emissionsflächen in einem geeigneten Abstand zueinander angeordnet sind. Die kohärenten Laserstrahlen können in diesem Fall im Wesentlichen parallel zueinander ausgerichtet auf die Fokussierlinse treffen und werden auf die Mikrolinsenanordnung fokussiert.

Bei einer Weiterbildung umfasst die Einkoppeloptik zur Korrektur einer Krümmung der Phasenfront der Mehrzahl von kohärenten Laserstrahlen mindestens eine weitere abbildende Optik, insbesondere mindestens eine weitere Linse. Wie weiter oben beschrieben wurde, kann zumindest ein Teil der relativen Phase der kohärenten Laserstrahlen, die für die kohärente Kombination erforderlich ist, mit Hilfe einer Optik eingestellt werden, die eines oder mehrere optische Elemente aufweist. Die Einstellung eines absoluten (d.h. nicht vom jeweiligen Laserstrahl abhängigen) Anteils der Phasenfront der Laserstrahlen kann als Korrektur der Phasenfrontkrümmung aufgefasst werden. Die Verwendung einer (weiteren) Optik zur Korrektur der Phasenfront ist aber nicht zwingend erforderlich, wenn die Vorrichtung, insbesondere die Einkoppeloptik, geeignet ausgelegt wird (s.u.). Die weitere Optik ist typischerweise im Strahlengang der kohärenten Laserstrahlen vor der Fokussiereinrichtung angeordnet.

Für die Erzeugung der Mehrzahl von kohärenten Laserstrahlen kann die Laserquelle einen einzigen Laser aufweisen, beispielsweise in Form eines (Faser-)Master-Oszillators. Die von dem Laser erzeugte Seed-Laserstrahlung wird z.B. mittels einer herkömmlichen 1-zu-N-Kopplungseinrichtung, beispielsweise in Form eines einzelnen Mikrolinsen-Arrays in die Mehrzahl N von Laserstrahlen aufgeteilt. Alternativ können auch mehrere Laserquellen, beispielsweise in Form von Faseroszillatoren, Laserdioden, etc. zur Erzeugung der Mehrzahl N von kohärenten Laserstrahlen dienen. In diesem Fall weist das Lasersystem eine Steuerungseinrichtung zur Ansteuerung der Laserdioden auf, um die kohärenten Laserstrahlen zu erzeugen. Die Laserquelle(n) können zur Erzeugung von Ultrakurzpuls-Laserstrahlen ausgebildet sein, d.h. von kohärenten Laserstrahlen, die eine Pulsdauer von weniger als z.B. 10⁻¹² s aufweisen.

Die in der bzw. in den Laserquellen erzeugten kohärenten Laserstrahlen werden typischerweise mit Hilfe einer Mehrzahl N von Strahlführungseinrichtungen, beispielsweise in Form von Fasern, zu den Emissionsflächen geführt. Die individuelle Strahlführung der Laserstrahlen ermöglicht es, auf diese einzeln einzuwirken, um mit Hilfe der Phasen-Einstelleinrichtung die relativen Phasen geeignet einzustellen. Die Strahlführungseinrichtungen können eine entsprechende Mehrzahl N von Verstärkern oder Verstärkerketten, beispielsweise in Form von Faser-Verstärkern, aufweisen, um die Laserstrahlen zu verstärken, bevor diese an den Emitterflächen in Richtung auf die Mikrolinsenanordnung emittiert werden. Die Phasen-Einstelleinrichtungen können im Strahlweg vor den Strahlführungseinrichtungen oder nach den Strahlführungseinrichtungen angeordnet sein und/oder auf die Strahlführungseinrichtungen, z.B. in Form der Fasern, einwirken. Der Vorteil eines solchen Lasersystems mit individuellen Verstärkern besteht nicht nur darin, höhere Laserleistungen zu erreichen, sondern auch darin, dass die Fehler, die sich in dem Verstärkeraufbau ansammeln, jeden der kohärenten Laserstrahlen unterschiedlich beeinflussen und daher bei der Bildung des kombinierten Laserstrahls ausgemittelt werden.

Bei einer weiteren Ausführungsform weisen die an den Emissionsflächen emittierten kohärenten Laserstrahlen ein Gauß-förmiges Strahlprofil, ein Donought-förmiges Strahlprofil oder ein Top-Hat-Strahlprofil auf. Wie weiter oben beschrieben wurde, ist die zeitliche Kohärenz der Laserstrahlen für die Überlagerung wichtig, die Laserstrahlen können aber von räumlich partiell kohärenten Laserquellen, beispielsweise von Multimode-Laserquellen erzeugt werden. Mit anderen Worten handelt es sich bei den kohärenten Laserstrahlen nicht zwingend um Single-Mode-Laserstrahlen, die in der Mikrolinsenanordnung zu einem kombinierten Single-Mode-Laserstrahl mit größerem Strahldurchmesser überlagert werden. Bei dem Beugungsmuster bzw. bei dem Multi-Spot-Profil, das von der Mikrolinsenanordnung erzeugt wird, wenn diese in umgekehrter Strahlrichtung von einem im Wesentlichen kollimierten Laserstrahl durchlaufen wird, weisen die einzelnen Spots z.B. ein im Wesentlichen Gauß-förmiges Strahlprofil, ein im Wesentlichen Donought-Förmiges oder ein im Wesentlichen Top-Hat-förmiges Strahlprofil auf. Es ist aber in der Regel günstig, wenn es sich bei den kohärenten Laserstrahlen, die für die kohärente Kombination verwendet werden, um Single-Mode-Laserstrahlen handelt, die zu einem Single-Mode-Laserstrahl kombiniert werden. Da bei der Einhaltung der Gleichung (1) eine homogene Verteilung von N Einzel-Spots erzeugt wird, sollte auch die Intensität der aus den Emitterflächen austretenden kohärenten Laserstrahlen möglichst homogen, d.h. gleich groß, sein.

Bei einer weiteren Ausführungsform weist das Lasersystem eine Steuerungseinrichtung auf, die ausgebildet bzw. programmiert ist, die (effektive) Brennweite der Mikrolinsenanordnung in Abhängigkeit von der Anzahl N der emittierten kohärenten Laserstrahlen einzustellen. Die Anzahl der emittierten kohärenten Laserstrahlen kann sich beispielsweise verändern, wenn zusätzliche Laserquellen in das Lasersystem eingebaut oder wenn Laserquellen aus dem Lasersystem entfernt werden. Bei dem hier beschriebenen Lasersystem handelt es sich um ein skalierbares System, d.h. es können prinzipiell beliebig viele kohärente Laserstrahlen überlagert werden. Durch die Anpassung der (effektiven) Brennweite der Mikrolinsenanordnung an die jeweils vorhandene Anzahl N von Laserquellen kann ein modularer Aufbau des Lasersystems erreicht werden.

Gegebenenfalls kann die bzw. eine Steuerungseinrichtung zur Ansteuerung der mindestens einen Laserquelle zur Festlegung einer Anzahl N von emittierten kohärenten Laserstrahlen ausgebildet sein. In diesem Fall können einzelne Laserquellen wahlweise ein- oder ausgeschaltet werden, beispielsweise um die Intensität des kombinierten Laserstrahls einzustellen. Zur Veränderung der Anzahl N der emittierten kohärenten Laserstrahlen werden typischerweise die jeweils äußersten Laserquellen des Lasersystems in Bezug auf eine Mittelachse der Mikrolinsenanordnung ein- oder ausgeschaltet. Die Anzahl der Mikrolinsen der Mikrolinsen-Arrays der Mikrolinsenanordnung ist unabhängig von der Anzahl N an kohärenten Laserstrahlen, die zur Kombination verwendet werden.

Bei einer weiteren Ausführungsform ist ein Abstand zwischen der Fokussiereinrichtung der Einkoppeloptik und der Mikrolinsenanordnung einstellbar und die Steuerungseinrichtung ist ausgebildet, den Abstand in Abhängigkeit von der Anzahl N der emittierten kohärenten Laserstrahlen einzustellen. In diesem Fall kann eine Anzahl N von parallel ausgerichteten kohärenten Laserstrahlen auf die Fokussiereinrichtung, beispielsweise auf eine Fokussierlinse, ausgerichtet werden, ohne dass eine weitere Optik für die Phasenkorrektur benötigt wird. Weist die Fokussiereinrichtung eine Brennweite f₂ auf, so ist die Mikrolinsenanordnung, genauer gesagt das erste Mikrolinsen-Array der Mikrolinsenanordnung, idealerweise in einem Abstand L2 von der Fokussiereinrichtung angeordnet, der gegeben ist durch: L2 = f₂ - p² / (λ_{L} N) bzw L2 = f₂ - f_{E}. Für die Einstellung des Abstands L2 kann die Steuerungseinrichtung beispielsweise auf die weiter oben beschriebene Verstellmechanik der Mikrolinsenanordnung einwirken. Durch die Abweichung des Abstands L2 der Mikrolinsenanordnung um p² / (λ_{L} N) von der Brennweite f₂ der Fokussiereinrichtung wird ein allen Laserstrahlen gemeinsamer Anteil der Phasenfront bzw. eine gemeinsame Phasenfrontkrümmung der auf die Mikrolinsenanordnung auftreffenden Laserstrahlen so eingestellt, dass die kohärenten Laserstrahlen beim Durchgang durch die Mikrolinsenanordnung bzw. durch den abbildenden Homogenisierer einen kombinierten, einzelnen Laserstrahl bilden. Die Bedingung an den Abstand L2 gilt auch als erfüllt, wenn die rechte Seite um weniger als 5%, bevorzugt um weniger als 2% von der linken Seite abweicht.

Bei einer weiteren Ausführungsform ist die Fokussiereinrichtung im Abstand ihrer Brennweite f₂ von der Mikrolinsenanordnung angeordnet und die Brennweite f₂ der Fokussiereinrichtung, eine Brennweite f₁ der weiteren abbildenden Optik und eine Brennweite f_{E} der Mikrolinsenanordnung erfüllen folgende Bedingung: f₁ = - f₂² / f_{E}. Wie weiter oben beschrieben wurde, dient die weitere abbildende Optik, die eines oder mehrere optische Elemente aufweisen kann, zur Korrektur einer Phasenfrontkrümmung, die allen Laserstrahlen gemeinsam ist. Unter der Annahme, dass die weitere abbildende Optik im Abstand ihrer Brennweite f₂ vor der Fokussiereinrichtung angeordnet ist, ist es zu diesem Zweck erforderlich, dass die Brennweiten die obige Bedingung erfüllen. Die Bedingung an die Brennweiten gilt auch als erfüllt, wenn die rechte Seite um weniger als 5%, bevorzugt um weniger als 2% von der linken Seite der obigen Bedingung abweicht.

Bei einer Weiterbildung ist die Brennweite der weiteren abbildenden Optik einstellbar und die Steuerungseinrichtung ist ausgebildet, die (effektive) Brennweite der weiteren abbildenden Optik in Abhängigkeit von der Anzahl N der emittierten kohärenten Laserstrahlen einzustellen. Da sich bei einer Veränderung der Anzahl N der emittierten kohärenten Laserstrahlen die effektive Brennweite der Mikrolinsenanordnung verändert, ist es typischerweise erforderlich, für die Erfüllung der obigen Bedingung an die Brennweiten auch die Brennweite der weiteren abbildenden Optik anzupassen, sofern nicht der Abstand der Fokussiereinrichtung zur Mikrolinsenanordnung eingestellt wird. Diese Anpassung ist beispielsweise möglich, wenn die weitere abbildende Optik zwei (dünne) Linsen aufweist, deren Abstand ds verändert wird, wobei sich die effektive Brennweite f₁ bzw. f_{E} gemäß obiger Grundgleichung (2) verändert, wobei in diesem Fall f₁ₐ, f₂ₐ die Brennweiten der dünnen Linsen der weiteren abbildenden Optik bezeichnen.

Bei einem Aspekt der Erfindung sind die Phasen-Einstelleinrichtungen ausgebildet, für den n-ten kohärenten Laserstrahl (n = 1, ..., *N*) eine (relative) Phase δφₙ einzustellen, die gegeben ist durch: ${δφ}_{n} = - \left(2 π/{λ}_{L}\right) {f}_{E} {\left({m}_{n} {λ}_{L}/p\right)}^{2}$ wobei p einen Rasterabstand der Mikrolinsen eines jeweiligen Mikrolinsen-Arrays, f_{E} die Brennweite der Mikrolinsenanordnung und λ_{L} die Laserwellenlänge bezeichnen.

Für den Laufindex mₙ gilt: ${m}_{n} = - \frac{\left(N+1\right)}{2} + n$*.* Die relative Phase δφₙ unterscheidet sich für jeden einzelnen kohärenten Laserstrahl und wird daher mit Hilfe der Phasen-Einstelleinrichtungen und nicht mit Hilfe von einem oder mehreren optischen Elementen der Einkoppeloptik eingestellt. Eine individuelle Einstellung der (relativen) Phase der kohärenten Laserstrahlen vor dem Auftreffen auf die Mikrolinsenanordnung ist erforderlich, um eine geeignete Phasenfront für die kohärente Kombination der Laserstrahlen zu erzeugen. Mit Hilfe einer Regelungseinrichtung kann eine Regelung der Phasen-Einstelleinrichtungen erfolgen, um die individuellen (relativen) Phasen in Abhängigkeit von den Eigenschaften des kombinierten Laserstrahls anzupassen.

Bei einer weiteren Ausführungsform sind benachbarte Emitterflächen äquidistant entlang der Richtung angeordnet und weisen einen Abstand δx voneinander auf, der gegeben ist durch δx = λ_{L} f₂ / p, wobei λ_{L} die Laserwellenlänge, f₂ die Brennweite der Fokussiereinrichtung und p einen Rasterabstand der Mikrolinsen eines jeweiligen Mikrolinsen-Arrays bezeichnen. Die kohärenten Laserstrahlen treten typischerweise aus Emitterflächen aus, die einen identischen Abstand voneinander aufweisen. Für den Fall, dass die Laserstrahlen parallel verlaufen, sind die Emitterflächen typischerweise entlang einer gemeinsamen Richtung bzw. Linie (z.B. in X-Richtung) angeordnet, die senkrecht zur gemeinsamen Strahlausbreitungsrichtung der Laserstrahlen verläuft. In diesem Fall ist der Abstand δx der Laserstrahlen bzw. der Emitterflächen typischerweise durch die obige Bedingung festgelegt.

Bei einer alternativen Ausführungsform sind benachbarte Emissionsflächen äquidistant auf einem Kreisbogen angeordnet und ausgerichtet, benachbarte kohärente Laserstrahlen mit einer vorgegebenen Winkeldifferenz δθ in die Mikrolinsenanordnung einzukoppeln, für die gilt: $δθ = {λ}_{L} / p ,$ wobei λ_{L} die Laserwellenlänge und p einen Rasterabstand der Mikrolinsen eines jeweiligen Mikrolinsen-Arrays bezeichnen. Wie weiter oben beschrieben wurde, hat sich die Anordnung der Emissionsflächen auf einem gemeinsamen Kreisbogen und mit einer Winkeldifferenz δθ, welche die oben angegebene Bedingung erfüllt, als vorteilhaft erwiesen.

In einer Ausführungsform weist die Einkoppeloptik eine strahlformende Optik zur Formung eines jeweiligen kohärenten Laserstrahls mit einem vorgegebenen, insbesondere einstellbaren Divergenz-Winkel bei der Einkopplung in die Mikrolinsenanordnung auf. Bei den weiter oben beschriebenen Beispielen werden die kohärenten Laserstrahlen typischerweise kollimiert in die Mikrolinsenanordnung eingekoppelt. Die strahlformende Optik kann beispielsweise zwei oder mehr hintereinander angeordnete Linsen aufweisen, welche alle kohärenten Laserstrahlen aufweitet, oder es können mehrere Linsen oder andere optische Elemente, beispielsweise eine der Mehrzahl von kohärenten Laserstrahlen entsprechende Anzahl von Einzellinsen oder ein (weiteres) Mikrolinsen-Array vorgesehen sein, um den (in der Regel für alle kohärenten Laserstrahlen gleichen) Divergenz-Winkel zu erzeugen. Für den Fall, dass die Emissionsflächen auf einem Kreisbogen angeordnet sind, kann auf diese Weise der Abstand D zwischen dem Kreisbogen und der Mikrolinsenanordnung verringert und so eine kompakte Bauweise erreicht werden. Beispielsweise gilt für den Fall, dass die strahlformende Optik durch eine Linse mit einer Brennweite f gebildet ist und die (effektive) Brennweite der Mikrolinsenanordnung mit f_{E} bezeichnet wird, für den Abstand D = f - f_{E}. Der Abstand D kann hierbei geringer ausfallen als der weiter oben beschriebene Abstand L2 = f₂ - f_{E} zwischen der Fokussiereinrichtung und dem ersten Mikrolinsen-Array, da die Brennweite f der strahlformenden Optik kleiner gewählt werden kann als die Brennweite f₂ der Fokussiereinrichtung.

Bei einer Weiterbildung weist das Lasersystem eine gerade Anzahl N von Emitterflächen auf und die strahlformende Optik weist eine Brennweite f auf, die folgende Bedingung erfüllt: $f = {p}^{2} / {λ}_{L} ,$ wobei λ_{L} die Laserwellenlänge und p einen Rasterabstand der Mikrolinsen eines jeweiligen Mikrolinsen-Arrays bezeichnen. Diese Bedingung gilt allgemein für die Kombination einer geraden Anzahl N von kohärenten Laserstrahlen, d.h. diese ist unabhängig von der Anzahl N von kohärenten Laserstrahlen. Diese Bedingung an die Brennweite der strahlformenden Optik definiert zudem den kompaktesten Aufbau der Vorrichtung, d.h. die Brennweite f sollte - unabhängig von der Anzahl N der kohärenten Laserstrahlen - nicht unterschritten werden, d.h. es sollte gelten f ≥ p²/ λ_{L}.

Bei den obigen Betrachtungen wurde von einer eindimensionalen Anordnung der Emitterflächen ausgegangen, die z.B. entlang einer gemeinsamen Linie oder auf einem gemeinsamen Kreisbogen angeordnet sein können. Die Emitterflächen liegen hierbei in einer gemeinsamen Ebene mit den Mikrolinsen der Mikrolinsen-Arrays, in der auch die Strahlausbreitungsrichtungen der Laserstrahlen verlaufen. Bei den Mikrolinsen handelt es sich in diesem Fall typischerweise um Zylinderlinsen.

Alternativ zur einer eindimensionalen kohärenten Kombination von Laserstrahlen ist es auch möglich, eine Mehrzahl von N x M Laserstrahlen zweidimensional zu einem gemeinsamen Laserstrahl zu kombinieren. In diesem Fall sind die Emitterflächen in einem zweidimensionalen Gitter bzw. in einem Raster angeordnet, wobei die Abstände zwischen benachbarten Emitterflächen in beiden Richtung gleich oder unterschiedlich gewählt werden können. Das Gitter mit den Emissionsflächen kann sich hierbei in einer Ebene (z.B. XY-Ebene) oder auf einer gekrümmten Fläche erstrecken, z.B. auf einer Kugelschale. Die aus den Emitterflächen austretenden Laserstrahlen sind im ersten Fall typischerweise parallel ausgerichtet und können im zweiten Fall beispielsweise in Richtung auf den Mittelpunkt der Kugelschlale hin ausgerichtet sein, an dem die Mikrolinsenanordnung angeordnet ist.

Die Periodizität des Gitters mit den Emitterflächen gibt hierbei die Rasterabstände der Mikrolinsen in zwei unterschiedlichen, beispielsweise senkrechten Richtungen (X, Y) vor. In diesem Fall können 2-dimensionale Mikrolinsen-Arrays verwendet werden, deren Rasterabstände pₓ, p_{Y} sich ggf. in den beiden zueinander senkrechten Richtungen X, Y in Abhängigkeit von der Periodizität des Gitters unterscheiden. Die Mikrolinsen des 2-dimensionalen Mikrolinsen-Arrays weisen entsprechend eine ggf. unterschiedliche Krümmung in X-Richtung bzw. in Y-Richtung auf, d.h. es handelt sich nicht um Zylinderlinsen. Es ist auch möglich, ein jeweiliges 2-dimensionales Mikrolinsen-Array durch zwei 1-dimensionale Mikrolinsen-Arrays mit Zylinderlinsen zu ersetzen, wobei die Zylinderlinsen der 1-dimensionalen Mikrolinsen-Arrays senkrecht zueinander ausgerichtet sind.

Der Zusammenhang zwischen dem 2-dimensionalen Gitter mit den Emitterflächen und den 2-dimensionalen Mikrolinsen-Arrays ist analog zum Zusammenhang zwischen dem Bravais-Gitter und dem reziproken Gitter. Entsprechend kann die Anordnung der Emitterflächen auch einer dichtesten Packung, d.h. einem hexagonalen Gitter, entsprechen. Die Mikrolinsen der Mikrolinsen-Arrays sind in diesem Fall ebenfalls in einer hexagonalen Anordnung angeordnet. Die Kombination der kohärenten Laserstrahlen in den beiden linear unabhängigen, nicht zwingend senkrechten Gitter-Richtungen ist grundsätzlich unabhängig, d.h. die weiter oben angegebenen Bedingungen bzw. Gleichungen gelten für beide Gitter-Richtungen unabhängig voneinander.

Lediglich bei der Einstellung der relativen Phase der Laserstrahlen addieren sich die Beiträge in den beiden zueinander senkrechten Richtungen, d.h. es gilt für eine Anzahl von N x M Laserstrahlen, die in einem rechteckigen Gitter (in X-Richtung bzw. Y-Richtung) angeordnet sind, für die jeweilige Phase δφ_{n,m}: ${δφ}_{n , m} = - \left(2 π/{λ}_{L}\right) {f}_{E , X} {\left({p}_{n} {λ}_{L}/{p}_{x}\right)}^{2} - \left(2 π/{λ}_{L}\right) {f}_{E , Y} {\left({q}_{m}{λ}_{L}/{p}_{Y}\right)}^{2} ,$ wobei pₓ den Rasterabstand der Mikrolinsen in X-Richtung und p_{y} den Rasterabstand der Mikrolinsen in Y-Richtung bezeichnen und wobei f_{E,X} die effektive Brennweite der Mikrolinsenanordnung in X-Richtung und f_{E,Y} die effektive Brennweite der Mikrolinsenanordnung in Y-Richtung bezeichnen. Hierbei gilt jeweils: ${p}_{n} = - \frac{\left(N+1\right)}{2} + n$ mit n = 1, ... , N und ${q}_{m} = - \frac{\left(M+1\right)}{2} + m$ mit *m* = 1, ... ,*M*.

Bei einer weiteren Ausführungsform weist das Lasersystem eine gerade Anzahl N von Emitterflächen auf und die Mikrolinsenanordnung weist eine Phasenschiebe-Einrichtung auf, die zur Erzeugung eines konstanten Phasenversatzes von π zwischen Strahlenbündeln der kohärenten Laserstrahlen ausgebildet ist, die benachbarte Mikrolinsen eines jeweiligen Mikrolinsen-Arrays durchlaufen. Ein Beugungsmuster weist in der Regel eine 0-te Beugungsordnung sowie symmetrisch dazu eine gerade Anzahl höherer Ordnungen auf, d.h. eine ungerade Gesamtzahl von Beugungs-Ordnungen auf. Um eine gerade Anzahl N von kohärenten Laserstrahlen entlang einer Richtung (z.B. X-Richtung) zu überlagern, ist es daher typischerweise erforderlich, die 0-te Beugungsordnung zu eliminieren. Zu diesem Zweck kann eine Phasenschiebe-Einrichtung verwendet werden, welche die 0-te Beugungsordnung durch destruktive Interferenz unterdrückt.

Die Phasenschiebe-Einrichtung kann beispielsweise als Phasenschieberelement ausgebildet sein, bei dem in einer Richtung quer zur Strahlausbreitungsrichtung alternierend erste Passierelemente und zweite Passierelemente gebildet sind, wobei das Passieren eines ersten Passierelements gegenüber dem Passieren eines zweiten Passierelements den Phasenversatz von π erzeugt. Ein solches Phasenschieberelement kann in Abhängigkeit von der (geraden oder ungeraden) Anzahl der kohärenten Laserstrahlen wahlweise in den Strahlengang eingebracht oder aus diesem entfernt werden, wozu beispielsweise die weiter oben beschriebene Verstellmechanik genutzt werden kann.

Alternativ kann die Phasenschiebe-Einrichtung in eines der Mikrolinsen-Arrays integriert sein. In diesem Fall sieht die Profilierung des Mikrolinsen-Arrays am Übergang zweier benachbarter Mikrolinsen jeweils einen Dickensprung vor, welcher den Phasenversatz von π erzeugt. Bei dieser Bauform kann ein separates Phasenschieberelement eingespart werden. Über die Breite einer MikrolinsenApertur bzw. eines Rasterabstands ändert sich beispielsweise die Dicke des Mikrolinsen-Arrays allmählich, so dass über die Breite der Mikrolinsenapertur ein Phasenversatz von π aufgebaut wird; diese Dickenänderung wird vom eigentlichen Linsenprofil überlagert. Ebenso ist es möglich, jede zweite Mikrolinse mit einer einheitlichen zusätzlichen Dicke auszubilden, welche analog zum weiter oben beschriebenen Phasenschieberelement den Phasensprung erzeugt.

Das weiter oben beschriebene Lasersystem ermöglicht grundsätzlich auch die kohärente Kombination von Ultrakurzpuls-Laserstrahlen ohne dass zusätzliche Modifikationen erforderlich sind. Für den Fall, dass eine vergleichsweise große Anzahl von kohärenten Laserstrahlen entlang einer Raumrichtung kombiniert werden sollen (beispielsweise in der Größenordnung von zehn oder mehr Laserstrahlen), ist es günstig, eine wellenlängenabhängige Korrektur vorzunehmen.

Bei einer weiteren Ausführungsform umfasst das Lasersystem ein erstes, vor der Mikrolinsenanordnung angeordnetes wellenlängendispersives Element, insbesondere ein erstes Beugungsgitter, zur spektralen Aufteilung der kohärenten Laserstrahlen auf mehrere Strahlenbündel, welche die Mikrolinsenanordnung räumlich getrennt durchlaufen, sowie ein zweites, nach der Mikrolinsenanordnung angeordnetes wellenlängendispersives optisches Element, insbesondere ein zweites Beugungsgitter, zur spektralen Zusammenführung der Strahlenbündel zur Bildung des kombinierten Laserstrahls mit einer Wellenlänge.

Bei dieser Ausführungsform werden die Laserstrahlen, die bei der Emission eine einheitliche Wellenlänge λ_{L} bzw. ein einheitliches Wellenlängenspektrum aufweisen, mittels eines ersten wellenlängendispersiven optischen Elements spektral in mehrere Strahlenbündel aufgeteilt, die typischerweise unterschiedlichen Beugungsordnungen des wellenlängendispersiven optischen Elements (und somit unterschiedlichen Wellenlängen) entsprechen. Die jeweiligen Strahlenbündel durchlaufen die Mikrolinsenanordnung räumlich getrennt und im Wesentlichen parallel zueinander. Die Einkoppeloptik kann ein optisches Element beispielsweise in Form einer Kollimationslinse aufweisen, um die aus dem ersten wellenlängenselektiven Element austretenden Strahlenbündel zu kollimieren bzw. parallel auszurichten. Mittels einer weiteren Optik, beispielsweise einer Fokussierlinse, werden die Strahlenbündel nach dem Durchlaufen der Mikrolinsenanordnung auf das zweite wellenlängendispersive optische Element eingestrahlt bzw. fokussiert, welches die spektrale Zusammenführung der Strahlenbündel zu dem gemeinsamen Laserstrahl bewirkt. Die weiter oben angegebenen Gleichungen bzw. Beziehungen, welche die Wellenlänge λ_{L} beinhalten, gelten entsprechend für die zentrale Wellenlänge der spektralen Verteilung der Strahlenbündel, die nicht zwingend mit der Wellenlänge λ_{L} der an den Emitterflächen emittierten Laserstrahlen übereinstimmen muss.

Bei einer Weiterbildung weist die Einkoppeloptik eine Kollimationslinse auf, die als asphärische Linse ausgebildet ist. Die Krümmung der asphärischen Linsenfläche wird hierbei so gewählt, dass eine wellenlängenabhängige Korrektur der Phasenfront der Laserstrahlen, genauer gesagt der jeweiligen Strahlenbündel, erfolgt. Wie weiter oben beschrieben wurde, ist eine solche wellenlängenabhängige Korrektur in der Regel lediglich erforderlich, wenn eine vergleichsweise große Anzahl von UKP-Laserstrahlen kohärent überlagert werden soll.

Ein weiterer Aspekt der Erfindung betrifft ein Verfahren nach Anspruch 23, 26 und 27.

Bei der Veränderung der Anzahl N von kombinierten Laserstrahlen ist es erforderlich, die (effektive) Brennweite der Mikrolinsenanordnung zu verändern. Zu diesem Zweck kann beispielsweise die weiter oben beschriebene Verstellmechanik verwendet werden.

Bei einer weiteren Variante erfolgt das Einkoppeln der kohärenten Laserstrahlen mittels einer Einkoppeloptik, die eine Fokussiereinrichtung aufweist, wobei das Verfahren weiter umfasst: Einstellen eines Abstands zwischen der Fokussiereinrichtung und der Mikrolinsenanordnung, der gegeben ist durch: L2 = f₂ - p² / (N λ_{L}), wobei f₂ eine Brennweite der Fokussiereinrichtung, p einen Rasterabstand der Mikrolinsen eines jeweiligen Mikrolinsen-Arrays und λ_{L} die Laserwellenlänge bezeichnen. Wie weiter oben beschrieben wurde, ist typischerweise zusätzlich zur Einstellung der absoluten Phasenunterschiede auch eine Korrektur der (globalen) Phasenfrontkrümmung erforderlich, die von der Anzahl N der kohärenten Laserstrahlen abhängig ist. In diesem Beispiel wird typischerweise keine zusätzliche abbildende Optik zur Korrektur der Phasenfrontkrümmung benötigt.

Bei einer alternativen Variante erfolgt das Einkoppeln mittels einer Einkoppeloptik, die eine Fokussiereinrichtung und eine weitere abbildende Optik aufweist, wobei das Verfahren weiter umfasst: Einstellen einer Brennweite f₁ der weiteren abbildenden Optik, die gegeben ist durch: f₁ = - f₂² / f_{E}, wobei f₂ eine Brennweite der Fokussiereinrichtung und f_{E} eine Brennweite der Mikrolinsenanordnung bezeichnen. Die Brennweite der weiteren abbildenden Optik kann beispielsweise eingestellt werden, indem der Abstand zwischen zwei oder mehr optischen Elementen der abbildenden Optik verändert wird. Durch die weitere abbildende Optik kann eine Korrektur der (globalen) Phasenkrümmung der Laserstrahlen vorgenommen werden. Weitere Vorteile der Erfindung ergeben sich aus der Beschreibung und der Zeichnung.

Es zeigen:
- Fig. 1: eine schematische Darstellung eines Lasersystems mit einer Vorrichtung zur Kombination einer Mehrzahl von kohärenten Laserstrahlen zu einem kombinierten Laserstrahl,
- Fig. 2: eine Darstellung der Vorrichtung von Fig. 1 mit einer Strahlkombinationseinrichtung, die eine Einkoppeloptik und eine Mikrolinsenanordnung mit zwei Mikrolinsen-Arrays umfasst,
- Fig. 3a,b: eine Darstellung einer Mikrolinsenanordnung mit drei Mikrolinsen-Arrays und mit einer Verstellmechanik sowie des Strahlengangs durch eine Sub-Apertur der Mikrolinsenanordnung,
- Fig. 4: eine Darstellung einer Vorrichtung analog zu Fig. 2, die Teil des Lasersystems von Fig. 1 ist, mit einer Einkoppeloptik, die eine abbildende Optik mit einstellbarer Brennweite zur Korrektur einer Phasenfrontkrümmung aufweist,
- Fig. 5: eine Darstellung einer Vorrichtung analog zu Fig. 4, die Teil des Lasersystems von Fig. 1 ist, bei welcher Emissionsflächen zur Emission der kohärenten Laserstrahlen zur Korrektur der Phasenkrümmung jeweils unter einem Winkel zueinander angeordnet sind,
- Fig. 6: eine Darstellung einer Vorrichtung analog zu Fig.4, die Teil des Lasersystems von Fig. 1 ist, bei welcher die Einkoppeloptik durch eine Fokussierlinse gebildet ist,
- Fig. 7: eine Darstellung einer Strahlkombinationseinrichtung einer Vorrichtung, die Teil des Lasersystems von Fig. 1 ist, bei welcher die Emissionsflächen auf einem Kreisbogen angeordnet sind,
- Fig. 8a,b: Darstellungen von zwei Strahlkombinationseinrichtungen von Vorrichtungen, die Teil des Lasersystems von Fig. 1 sind, bei denen die Emissionsflächen jeweils in einem Gitter angeordnet sind,
- Fig. 9a-c: Darstellungen von drei Mikrolinsenanordnungen einer Strahlkombinationseinrichtung einer Vorrichtung, die Teil des Lasersystems von Fig. 1 ist, wobei die Mikrolinsenanordnungen jeweils eine Phasenschiebe-Einrichtung aufweisen,
- Fig. 10: Darstellungen einer Strahlkombinationseinrichtung einer Vorrichtung, die Teil des Lasersystems von Fig. 1 ist, wobei die Strahlkombinationseinrichtung zwei Beugungsgitter und eine asphärische Linse zur wellenlängenabhängigen Korrektur bei der kohärenten Kombination von UKP-Laserstrahlen aufweist,
- Fig. 11: eine Darstellung einer Strahlkombinationseinrichtung analog zu Fig. 7, die Teil einer Vorrichtung ist, die Teil des Lasersystems von Fig. 1 ist, wobei die Strahlkombinationseinrichtung eine strahlformende Optik zur Formung von kohärenten Laserstrahlen aufweist, die mit einem jeweiligen vorgegebenen Divergenz-Winkel in die Mikrolinsenanordnung eintreten,
- Fig. 12: eine Darstellung einer Strahlkombinationseinrichtung analog zu Fig. 6, die Teil einer Vorrichtung ist, die Teil des Lasersystems von Fig. 1 ist, wobei die Strahlkombinationseinrichtung eine Bewegungseinrichtung zur Erzeugung eines lateralen Versatzes zwischen dem zweiten Mikrolinsen-Array und dem ersten Mikrolinsen-Array aufweist,
- Fig. 13a-c: Darstellungen des Fernfeldes der Strahlkombinationseinrichtung von Fig. 12 ohne bzw. mit einem lateralen Versatz von zwei Mikrolinsen-Arrays zum Ablenken des kombinierten Laserstrahls, sowie
- Fig. 14a-c: Darstellungen des Fernfeldes der Strahlkombinationseinrichtung von Fig. 12 ohne bzw. mit einem lateralen Versatz von zwei Mikrolinsen-Arrays zum Bilden von zwei kombinierten Laserstrahlen.

In der folgenden Beschreibung der Zeichnungen werden für gleiche bzw. funktionsgleiche Bauteile identische Bezugszeichen verwendet.

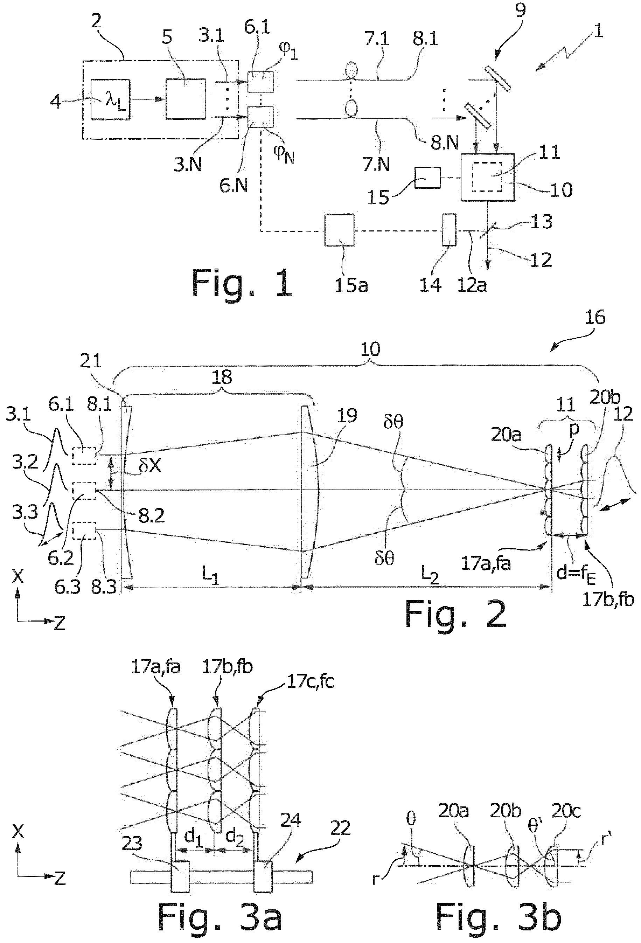

Fig. 1 zeigt einen beispielhaften Aufbau eines Lasersystems 1, welches eine Laserquelle 2 zur Erzeugung einer Anzahl N von kohärenten Laserstrahlen 3.1, ..., 3.N aufweist. Die Laserquelle 2 weist zu diesem Zweck einen modengekoppelten Faser-Master-Oszillator 4 auf, der Seed-Laserstrahlung mit einer Laserwellenlänge λ_{L} erzeugt, die in einer herkömmlichen 1-zu-N-Kopplungseinrichtung 5, beispielsweise in Form eines Mikrolinsen-Arrays, in die Anzahl N von kohärenten Laserstrahlen 3.1,..., 3.N aufgeteilt wird. Die Laserstrahlen 3.1, ..., 3.N durchlaufen eine entsprechende Anzahl N von Phasen-Einstelleinrichtungen 6.1, ..., 6.N., welche die Einstellung einer jeweiligen individuellen Phase δφₙ der Laserstahlen 3.1, ..., 3.5 (n = 1, ..., N) ermöglichen, indem sie eine geeignete Phasen-Verzögerung bewirken. Die Phasen-Einstelleinrichtungen 6.1, ..., 6.N können beispielsweise als Elektro-optische Modulatoren, als Akusto-optische Modulatoren, etc. ausgebildet sein.

Nach den Phasen-Einstelleinrichtungen 6.1, ..., 6.N durchlaufen die kohärenten Laserstrahlen 3.1, ..., 3.N eine entsprechende Anzahl N von Verstärker-Fasern 7.1, ..., 7.N, um die kohärenten Laserstrahlen 3.1, ..., 3.N zu verstärken. Die Stirnseiten der Verstärker-Fasern 7.1, ..., 7.N dienen als Emissionsflächen 8.1, ..., 8.N, an denen die kohärenten Laserstrahlen 3.1, ..., 3.N emittiert werden. Die Phasen-Einstelleinrichtungen 6.1, ..., 6.N können auch hinter den Verstärker-Fasern 7.1, ..., 7.N angeordnet sein oder direkt auf die Verstärker-Fasern 7.1, ..., 7.N einwirken, beispielsweise indem diese eine einstellbare mechanische Spannung auf die Verstärker-Fasern 7.1, ..., 7.N erzeugen.

Die kohärenten Laserstrahlen 3.1, ..., 3.N werden an einer Umlenkeinrichtung 9, die eine Mehrzahl von Umlenkspiegeln aufweist, umgelenkt, um den Füllfaktor zu erhöhen, d.h. um den Abstand zwischen benachbarten Laserstrahlen 3.1, ..., 3.N zu verringern. Es versteht sich, dass die Umlenkeinrichtung 9 nicht zwingend erforderlich ist. Die kohärenten Laserstrahlen 3.1, ..., 3.N treten im gezeigten Beispiel parallel zueinander ausgerichtet in eine Strahlkombinationseinrichtung 10 ein, die eine Mikrolinsenanordnung 11 bzw. einen abbildenden Homogenisierer zur kohärenten Kombination der Laserstrahlen 3.1, ..., 3.N für die Bildung eines kombinierten Laserstrahls 12 aufweist.

Wie in Fig. 1 zu erkennen ist, wird ein Anteil 12a des kombinierten Laserstrahls 12 über eine Auskoppeleinrichtung in Form eines teiltransmissiven Spiegels 13 ausgekoppelt und trifft auf einen Detektor 14. Der Detektor 14 steht mit einer Regelungseinrichtung 15a des Lasersystems 1 in signaltechnischer Verbindung, welche die Phasen-Einstelleinrichtungen 6.1, ..., 6.N ansteuert, um die individuellen Phasen δφₙ der Laserstahlen 3.1, ..., 3.N in Abhängigkeit von den Eigenschaften des detektierten Anteils 12a des kombinierten Laserstrahls 12 anzupassen. Die Regelungseinrichtung 15a kann insbesondere eine Regelung der Phasen-Einstelleinrichtungen 6.1, ..., 6.N zur Erzeugung von gewünschten (Soll-)Phasen δφₙ der Laserstahlen 3.1, ..., 3.N ermöglichen. Obgleich im gezeigten Beispiel die Anzahl N von Phasen-Einstelleinrichtungen 6.1, ..., 6.N der Mehrzahl N von Laserstrahlen 3.1, ..., 3.N entspricht, ist in der Regel eine Anzahl von N - 1 Phasen-Einstelleinrichtungen 6.1, ..., 6.N-1 ausreichend. Bei dem in Fig. 1 gezeigten Lasersystem 1 kann einerseits eine hohe Strahlqualität von z.B. M = 1,3 des kombinierten Laserstrahls 12 erreicht werden, andererseits mitteln sich Fehler durch nichtlineare Effekte bei der individuellen Verstärkung der Laserstrahlen 3.1, ..., 3.N in den Verstärker-Fasern 7.1, ..., 7.N gegenseitig weg, so dass eine deutliche Erhöhung der Leistung der Laserstrahlen 3.1, ..., 3.N erreicht werden kann.

Fig. 2 zeigt eine Vorrichtung 16 der Fig. 1 zur Kombination einer (beispielhaften) Anzahl von N = 3 kohärenten Laserstrahlen 3.1, 3.2, 3.3 unter Verwendung einer Strahlkombinationseinrichtung 10, welche eine Mikrolinsenanordnung 11 mit zwei Mikrolinsen-Arrays 17a,b sowie eine Einkoppeloptik 18 aufweist. Die Vorrichtung 16 umfasst auch drei Phasen-Einstelleinrichtungen 6.1, 6.2, 6.3 zur Einstellung der Phasen δφ₁, δφ₂, δφ₃ der drei Laserstrahlen 3.1, 3.2, 3.3 derart, dass sich in Kombination mit der Einkoppeloptik 18 eine Phasenfront an der Mikrolinsenanordnung 11 ausbildet, welche die kohärente Kombination der Laserstrahlen 3.1, 3.2, 3.3. zu dem kombinierten Laserstrahl 12 unter Erhaltung der Strahlqualität ermöglicht. Die Emitterflächen 8.1, 8.2, 8.3 sind hierbei entlang einer Linie in X-Richtung angeordnet und die Laserstrahlen 3.1, 3.2, 3.3 treten parallel ausgerichtet entlang einer einheitlichen Ausbreitungsrichtung (Z-Richtung) in die Einkoppeloptik 18 ein.

Die Emitterflächen 8.1, 8.2, 8.3 bzw. die kohärenten Laserstrahlen 3.1, 3.2, 3.3 sind hierbei äquidistant, d.h. in gleichen Abständen δx, entlang der X-Richtung angeordnet. Die Einkoppeloptik 18 ist ausgebildet, benachbarte kohärente Laserstrahlen 3.1, 3.2, 3.3 mit einer vorgegebenen Winkeldifferenz δθ in die Mikrolinsenanordnung 11 einzukoppeln, für die gilt: δθ = λ_{L} / p, wobei λ_{L} die (einheitliche) Wellenlänge der Laserstrahlen 3.1, 3.2, 3.3 und p einen Rasterabstand (pitch) der Mikrolinsen 20a,b eines jeweiligen Mikrolinsen-Arrays 17a,b bezeichnen.

Um die Winkeldifferenz δθ zu erzeugen, weist die Einkoppeloptik 18 eine Fokussiereinrichtung in Form einer Fokussierlinse 19, genauer gesagt einer Zylinderlinse, auf, welche die Laserstrahlen 3.1, 3.2, 3.3 auf die Mikrolinsenanordnung 11, genauer gesagt auf das erste Mikrolinsen-Array 17a der Mikrolinsenanordnung 11, fokussiert. Um die Bedingung an die Winkeldifferenz δθ zu erfüllen, sind bei dem in Fig. 2 gezeigten Beispiel die Emitterflächen 8.1, 8.2, 8.3 in einem Abstand δx angeordnet, der gegeben ist durch δx = λ_{L} f₂ / p, wobei f₂ die Brennweite der Fokussierlinse 19 bezeichnet, die in Fig. 2 in einem Abstand L2 von der Mikrolinsenanordnung 11 angeordnet ist, welcher mit deren Brennweite f₂ übereinstimmt, d.h. es gilt: L2 = f₂.

Unter der Voraussetzung, dass die Intensitäten der aus den Emissionsflächen 8.1, 8.2, 8.3 austretenden Laserstrahlen 3.1, 3.2, 3.3 gleich groß sind, kann mittels der Mikrolinsenanordnung 11 der in Fig. 2 gezeigte kohärent überlagerte Laserstrahl 12 erzeugt werden, wenn die Mikrolinsenanordnung 11 und die kombinierten Laserstrahlen 3.1, 3.2, 3.3 folgende Gleichung (1) erfüllen: $N = {p}^{2} / \left({λ}_{L} {f}_{E}\right)$ wobei N die Anzahl der kohärenten Laserstrahlen (hier: N = 3) und f_{E} die Brennweite der Mikrolinsenanordnung 11 bezeichnen. Die Gleichung (1) sollte möglichst exakt eingehalten werden, da Abweichungen zu einer Verschlechterung der Strahlqualität des kombinierten Laserstrahls 12 führen.

Im gezeigten Beispiel weisen die Mikrolinsen 20a des ersten Mikrolinsen-Arrays 17a eine erste Brennweite fₐ und die Mikrolinsen 20b des zweiten Mikrolinsen-Arrays 17b weisen eine zweite Brennweite f_{b} auf, wobei gilt fₐ = f_{b}. Im gezeigten Beispiel sind die beiden Mikrolinsen-Arrays 17a,b in einem Abstand d zueinander angeordnet, welcher der Brennweite fₐ bzw. f_{b} und der resultierenden Brennweite f_{E} der Mikrolinsenanordnung 11 entspricht.

Bei den Laserstrahlen 3.1, 3.2, 3.3, die aus den Emissionsflächen 8.1, 8.2, 8.3 austreten, handelt es sich im gezeigten Beispiel um Single-Mode-Strahlen, d.h. diese weisen jeweils ein Gauß-Profil mit einer Halbwerts-Breite w_{R,0} auf. Alternativ können die Laserstrahlen 3.1, 3.2, 3.3 ein anderes Strahlprofil mit einem ggf. verminderten Grad an räumlicher Kohärenz aufweisen, beispielsweise ein Donought-förmiges Strahlprofil oder ein Top-Hat-Strahlprofil. Um aus den Laserstrahlen 3.1, 3.2, 3.3 in der Mikrolinsenanordnung 11 einen kombinierten Laserstrahl 12 mit einem entsprechenden Gauß-Profil mit einer größeren Halbwerts-Breite w_{R} > w_{R,0} zu bilden, ist es erforderlich, dass die Laserstrahlen 3.1, 3.2, 3.3 mit einer Phasenfront bzw. mit einzelnen (vom Einfallswinkel θ abhängigen) Phasen δφₙ(θ) auf die Mikrolinsenanordnung 11 eingestrahlt werden, für die gilt: ${δφ}_{n} \left(θ\right) = = \left(2 π/{λ}_{L}\right) {f}_{E} {θ}^{2} - \left(2 π/{λ}_{L}\right) {f}_{E} \left({λ}_{L}/p\right) {m}_{n} θ ,$ wobei im vorliegenden Beispiel gilt: mₙ = -1, 0, +1.

Für die Phasenfront bzw. die einzelnen Phasen δφₙ(x) im Ortsraum gilt in guter Näherung: ${δφ}_{n} \left(x\right) = = \left(2 π/{λ}_{L}\right) 1 \left(2 {f}_{1}\right) {x}^{2} - \left(2 π/{λ}_{L}\right) {f}_{E} {\left({m}_{n} {λ}_{L}/p\right)}^{2} ,$ wobei x = 0 die Mittelachse der Strahlkombinationseinrichtung 10 bezeichnet, entlang derer der mittlere Laserstrahl 3.2 propagiert und f₁ die Brennweite einer weiteren abbildenden Optik 21 in Form einer Zylinderlinse bezeichnet, die zur Korrektur der Phasenkrümmung verwendet wird und die im einfachsten Fall (bei einer eindimensionalen Kombination) als Zylinderlinse ausgebildet sein kann. Die weitere abbildende Optik 21 ist in einem Abstand L1 vor der Fokussierlinse 19 angeordnet, welcher der Brennweite f₂ der Fokussierlinse 19 entspricht.

Der erste Summand der obigen Gleichung (4) für die ortsabhängigen Phasen δφₙ(x) entspricht einer abbildenden Optik in Form einer (Zylinder-)Linse 21, wenn deren Brennweite f₁ bei der in Fig. 2 gezeigten Vorrichtung 16 folgende Bedingung erfüllt: f₁ = - f₂² / f_{E}. Die weitere abbildende Optik 21 dient somit zur Anpassung der Krümmung der Phasenfront φₙ(x) der auf die Mikrolinsenanordnung 11 auftreffenden Laserstrahlen 3.1, 3.2, 3.3, um die obige Gleichung (4) hinsichtlich des ersten Summanden zu erfüllen.

Für die Einstellung der (individuellen) Phasen δφₙ der Laserstrahlen 3.1, 3.2, 3.3, welche dem zweiten Summanden in der obigen Gleichung entsprechen, werden die Phasen-Einstelleinrichtungen 6.1, 6.2, 6.3 mit Hilfe der Regelungseinrichtung 15a so angesteuert, dass diese für den n-ten kohärenen Laserstrahl 3.1, ..., 3.N folgende Phase δφₙ erzeugen: ${δφ}_{n} = - \left(2 π/{λ}_{L}\right) {f}_{E} {\left({m}_{n} {λ}_{L}/p\right)}^{2} .$

Im vorliegende Beispiel, d.h. bei einer Anzahl von N = 3 Laserstrahlen 3.1, 3.2, 3.3 ergibt sich für die drei einzustellenden (relativen) Phasen δφ₁, δφ₂, δφ₃: ${δφ}_{1} = + \left(2 π/{λ}_{L}\right) {f}_{E} {\left({λ}_{L}/p\right)}^{2}$ ${δφ}_{2} = 0$ ${δφ}_{3} = - \left(2 π/{λ}_{L}\right) {f}_{E} {\left({λ}_{L}/p\right)}^{2}$

Die Anzahl N der kohärenten Laserstrahlen 3.1, ..., 3.N kann verändert werden, indem die Laserquelle 2 bzw. das Lasersystem 1 insgesamt modifiziert wird, beispielsweise indem Emitterflächen 8.1, ..., 8.N, Phasen-Einstelleinrichtungen 6.1, ..., 6.N etc. hinzugefügt oder weggenommen werden. Die Anzahl N der kohärenten Laserstrahlen 3.1, ..., 3.N, die für die Kombination verwendet werden, kann auch verändert werden, indem die Regelungseinrichtung 15a die Laserquelle 2 ansteuert, um die Intensität bestimmter Laserstrahlen 3.1, ..., 3.N. zu verändern, beispielsweise um bestimmte Laserstrahlen 3.1, ..., 3.N wahlweise ein- oder auszuschalten.

Bei einer Veränderung der Anzahl N der kohärenten Laserstrahlen 3.1, ..., 3.N ist es erforderlich, die Strahlkombinationseinrichtung 11 geeignet anzupassen, um die weiter oben beschriebenen Bedingungen, unter anderem die Gleichung (1), zu erfüllen. Zu diesem Zweck ist kann die Mikrolinsenanordnung 11 zur Einstellung ihrer (effektiven) Brennweite f_{E} ausgebildet sein und weist mindestens drei Mikrolinsen-Arrays 17a-c mit Brennweiten fₐ, f_{b}, f_{c} auf, wie dies beispielhaft für die Mikrolinsenanordnung 11 von **Fig. 3a** dargestellt ist.

Die effektive Brennweite f_{E} bezieht sich auf ein Strahlbündel, welches jeweils eine Mikrolinse 20a-c je Mikrolinsen-Array 17a-c (entsprechend einer Sub-Apertur) durchläuft, vgl. Fig. 3b. Eine Mikrolinsenanordnung 11, die in der Strahlkombinationseinrichtung 10 verwendet wird, weist bezogen auf ein Strahlbündel zu jeweils einer Mikrolinse 20a-c je Mikrolinsen-Array 17a-c in der Schreibweise der Matrizenoptik, also als Abbildungsmatrix $\left(\begin{matrix}A & B \\ C & D\end{matrix}\right)$, für den eingangsseitigen Vektor (r,θ) und den ausgangsseitigen Vektor (r',θ') typischerweise folgende Eigenschaften auf: A=0; |B|=f_{E}. Weiterhin gilt meist auch D<1 (für einen im Wesentlichen kollimierten Strahl); C ergibt sich dann abhängig von A, B und D. Die Verwendung von mindestens drei Mikrolinsen-Arrays 17a-c ist erforderlich, um die zweite Bedingung |B|= f_{E} für variables f_{E} zu erfüllen.

Eine motorische Verstellmechanik 22 (beispielsweise mit einem in eine Zahnstange eingreifenden angetriebenen Zahnrad) erlaubt es, die Positionen von Schlitten 23, 24, welche das erste und dritte Mikrolinsen-Array 17a, 17c der Mikrolinsenanordnung 11 tragen, motorisch mit Hilfe einer elektronischen (programmierbaren) Steuerungseinrichtung 15 zu verstellen, und damit einen Abstand d1 zwischen dem ersten und zweiten Mikrolinsen-Array 17a, 17b sowie einen Abstand d2 zwischen dem zweiten und dritten Mikrolinsen-Array 17b, 17c unabhängig voneinander einzustellen. Das zweite Mikrolinsen-Array 17b ist im gezeigten Beispiel ortsfest ausgebildet.

Für eine gewünschte effektive Brennweite f_{E} entsprechend Gleichung (1) können die einzustellenden Abstände d₁, d₂ bei gegebenen Brennweiten fₐ, f_{b}, f_{c} wie folgt bestimmt und die Schlitten 23, 24 entlang von Führungen an entsprechende Verstellpositionen bewegt werden: ${d}_{2} = {f}_{b} \left(1+\frac{{f}_{E}}{{f}_{a}}\right)$ und ${d}_{1} = {f}_{b} + {f}_{a} + \frac{{f}_{b} {f}_{a}}{{f}_{E}}$

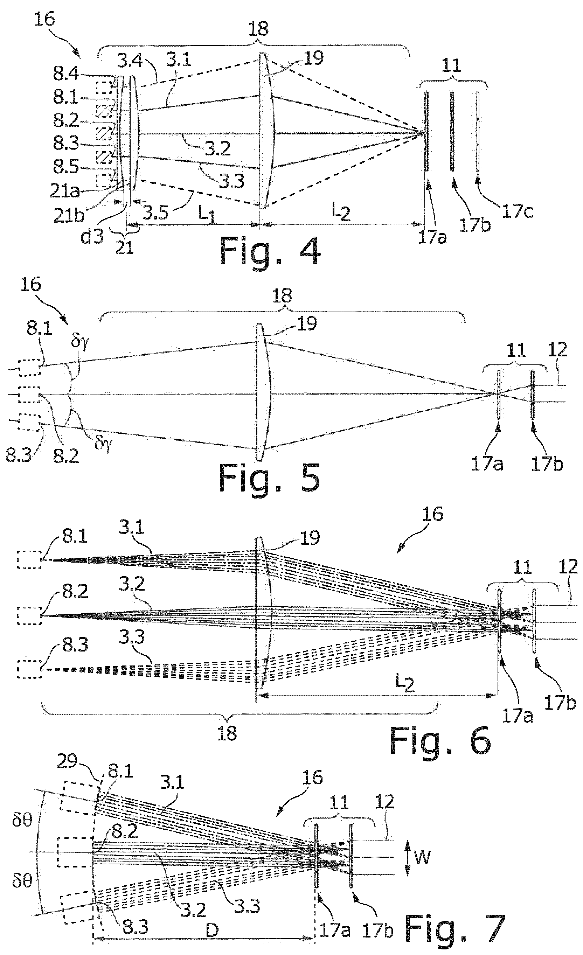

Wird die effektive Brennweite f_{E} der Mikrolinsenanordnung 11 verändert, ist es typischerweise auch erforderlich, die Einkoppeloptik 18 entsprechend anzupassen. Bei der in Fig. 2 gezeigten Vorrichtung 16 kann dies dadurch erreicht werden, dass die Brennweite f₁ der weiteren abbildenden Optik 21 einstellbar gemacht wird, um die Bedingung f₁ = -f₂² / f_{E} zu erfüllen. Zu diesem Zweck kann die weitere abbildende Optik 21 durch zwei (dünne) Linsen 21a, 21b gebildet werden, deren Abstand d3 einstellbar ist, wie dies in **Fig. 4** dargestellt ist. Durch die Wahl des Abstandes d3 zwischen den Linsen 21a, 21b verändert sich die (effektive) Brennweite f₁ der weiteren abbildenden Optik 21, so dass die obige Bedingung erfüllt werden kann, beispielsweise wenn die Anzahl N der Laserstrahlen 3.1, ..., 3.N von N = 3 auf N = 5 erhöht wird, wie dies in Fig. 4 angedeutet ist, bei der zwei zusätzliche, äußere Laserstrahlen 3.4, 3.5 bzw. Emitterflächen 8.4, 8.5 hinzugefügt wurden.

**Fig. 5** zeigt eine Vorrichtung 16 der Fig. 1, bei der die Einkoppeloptik 18 keine zusätzliche abbildende Optik 21 zur Korrektur der Phasenfront δφₙ(x) aufweist. Für die Anpassung der Phasenfront δφₙ(x) sind die Emitterflächen 8.1, 8.2, 8.3 jeweils unter einem Winkel δγ zueinander ausgerichtet, der dem Winkel entspricht, unter dem die Laserstrahlen 3.1, 3.2, 3.3 aus der in Fig. 2 bzw. in Fig. 4 gezeigten abbildenden Optik 21 austreten. Die Anpassung der Phasenfront δφₙ(x), genauer gesagt des ersten Summanden in obiger Gleichung (4), kann in diesem Fall ohne das Vorsehen einer zusätzlichen abbildenden Optik erreicht werden, d.h. die Einkoppeloptik 18 weist lediglich die Fokussierlinse 19 auf.

Auf eine abbildende Optik 21 zur Anpassung der Phasenfrontkrümmung kann auch verzichtet werden, wenn die Emitterflächen 8.1, 8.2, 8.3 entlang einer Linie in X-Richtung angeordnet und parallel ausgerichtet sind, wie dies in Fig. 6 dargestellt ist. In diesem Fall ist der Abstand L2 zwischen der Fokussierlinse 19 und der Mikrolinsenanordnung 11, genauer gesagt dem ersten Mikrolinsen-Array 17a der Mikrolinsenanordnung 11, geeignet gewählt, und zwar wie folgt: L2 = f₂ - p² / (N λ_{L}). Der Abstand L2 hängt bei der Vorrichtung 16 von Fig. 6 somit ebenfalls von der Anzahl N der Laserstrahlen 3.1, ..., 3.N ab, so dass dieser bei einer Veränderung der Anzahl N von Laserstrahlen 3.1, ..., 3.N ebenfalls angepasst werden muss. Zu diesem Zweck kann die Steuerungseinrichtung 15 auf die Fokussierlinse 19 und/oder auf die in diesem Fall ohnehin vorhandene Verstellmechanik 22 der Mikrolinsenanordnung 11 einwirken, um die Fokussierlinse 19 und die Mikrolinsenanordnung 11 relativ zueinander zu verschieben.

Bei der in Fig. 7 gezeigten Vorrichtung 16 der Fig. 1 weist die Strahlkombinationseinrichtung 10 nur die Mikrolinsenanordnung 11 und keine Einkoppeloptik auf. In diesem Beispiel sind die Emitterflächen 8.1, 8.2, 8.3 auf einem Kreisbogen 29 unter einem jeweiligen Differenzwinkel : δθ = λ_{L} / p zueinander ausgerichtet. Für den Füllfaktor FF der Laserstrahlen 3.1, 3.2, 3.3 gilt in diesem Fall: $FF = 2 p / \left(π w\right) ,$ wobei w den Strahldurchmesser des kombinierten Laserstrahls 12 bezeichnet. Für den Abstand D gilt: $D = {w}^{2} π / {λ}_{L} 4 {p}^{2} / \left(π {FF}^{2} {λ}_{L}\right) .$

Um mit der in Fig. 7 gezeigten Vorrichtung 16 einen Füllfaktor FF von z.B. ca. 35% bei einem Rasterabstand p von ca. 500 µm zu erreichen, ist ein vergleichsweise großer Abstand D von ca. 2,5 m erforderlich.

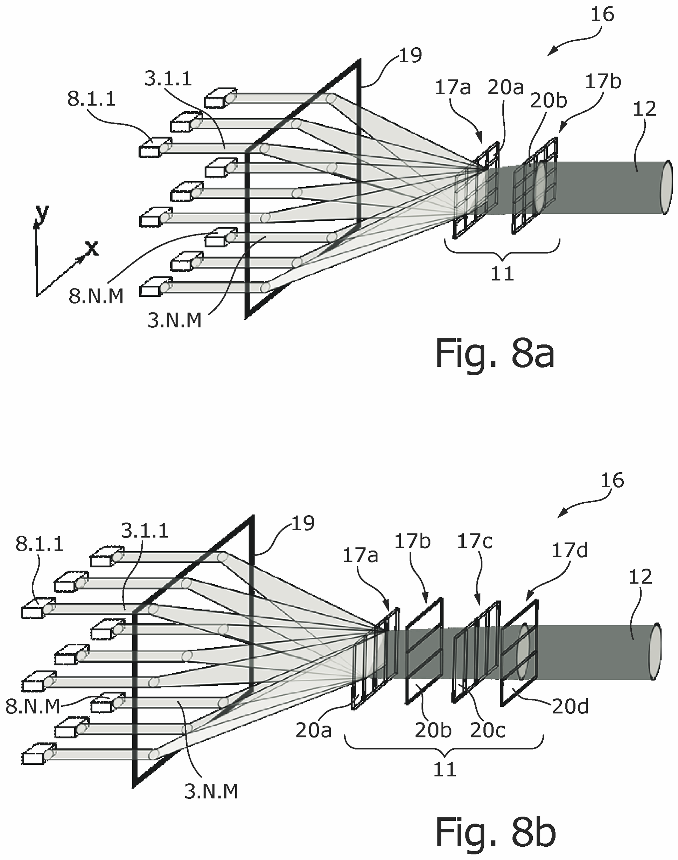

Bei den in Zusammenhang mit Fig. 2 bis Fig. 7 beschriebenen Vorrichtungen 16 wurden die Laserstrahlen 3.1, ..., 3.N eindimensional kombiniert. Fig. 8a**,b** zeigen jeweils eine Vorrichtung 16 der Fig. 1, bei der eine Anzahl N (hier: N = 3) x M (hier: M = 3) von Emissionsflächen 8.1.1, ..., 8.N.M in einem zweidimensionalen Gitter angeordnet ist. Bei dem in Fig. 8a gezeigten Beispiel sind die Emissionsflächen 8.1.1, ... 8.N.M in einem rechteckigen Gitter in einer gemeinsamen Ebene (XY-Ebene) angeordnet und die Strahlausbreitungsrichtungen aller Laserstrahlen 3.1.1, ..., 3.N.M verlaufen parallel (in Z-Richtung). Analog zu Fig. 6 weist die Einkoppeloptik 18 bei der Vorrichtung 16 von Fig. 8a lediglich eine Fokussiereinrichtung in Form einer Fokussierlinse 19 auf, die in Fig. 8a als Quadrat dargestellt ist. Die Mikrolinsen 20a,b der Mikrolinsen-Arrays 17a,b der Mikrolinsenanordnung 11 sind jeweils in einem entsprechenden, rechteckigen Gitter angeordnet und parallel zur XY-Ebene ausgerichtet.

In Abhängigkeit von den Abständen der Emitterflächen 8.1.1, ... 8.N.M bzw. von der Periodizität des Gitters in X-Richtung bzw. in Y-Richtung können sich auch die Rasterabstände pₓ, p_{Y} der Mikrolinsen 20a,b in den beiden zueinander senkrechten Richtungen X, Y voneinander unterscheiden. Die Mikrolinsen 20a,b weisen entsprechend eine ggf. unterschiedliche Krümmung in X-Richtung und in Y-Richtung auf, d.h. es handelt sich nicht um Zylinderlinsen. Die Kombination der kohärenten Laserstrahlen 3.1.1, ... 3.N.M in den beiden linear unabhängigen, im gezeigten Beispiel senkrechten Richtungen X, Y ist grundsätzlich unabhängig, d.h. die weiter oben angegebenen Bedingungen bzw. Gleichungen gelten für beide Richtungen X, Y unabhängig voneinander.

Lediglich bei der Einstellung der relativen Phase der Laserstrahlen 3.1.1, ... 3.N.M addieren sich die Beiträge in den beiden zueinander senkrechten Richtungen, d.h. es gilt für eine Anzahl von N x M Laserstrahlen, die in einem rechteckigen Gitter (in X-Richtung bzw. Y-Richtung) angeordnet sind, für die jeweilige Phase δφ_{n,m}: ${δφ}_{n , m} = - \left(2 π/{λ}_{L}\right) {f}_{E , X} {\left({p}_{n} {λ}_{L}/{p}_{x}\right)}^{2} - \left(2 π/{λ}_{L}\right) {f}_{E , Y} {\left({q}_{m}{λ}_{L}/{p}_{Y}\right)}^{2}$ wobei pₓ den Rasterabstand der Mikrolinsen in X-Richtung und p_{y} den Rasterabstand der Mikrolinsen in Y-Richtung bezeichnet und wobei f_{E,X} die effektive Brennweite der Mikrolinsenanordnung 11 in X-Richtung und f_{E,Y} die effektive Brennweite der Mikrolinsenanordnung 11 in Y-Richtung bezeichnet, wobei gilt: ${p}_{n} = - \frac{\left(N+1\right)}{2} + n$ mit n = 1, ... , N und ${q}_{m} = - \frac{\left(M+1\right)}{2} + m$ mit *m* = 1, ... ,*M*.

Fig. 8b zeigt eine Vorrichtung 16 analog zu Fig. 8a, bei der die beiden zweidimensionalen Mikrolinsen-Arrays 17a,b der Mikrolinsenanordnung 11 durch vier eindimensionale Mikrolinsen-Arrays 17a-d ersetzt sind. Die Mikrolinsen-Arrays 17a-d weisen jeweils eine Mehrzahl von Mikrolinsen 20a-d in Form von Zylinderlinsen auf, wobei die Mikrolinsen 20a,c des ersten und dritten Mikrolinsen-Arrays 17a,c und die Mikrolinsen 20b,d des zweiten und vierten Mikrolinsen-Arrays 17b,d senkrecht zueinander, und zwar in X-Richtung bzw. in Y-Richtung, ausgerichtet sind.

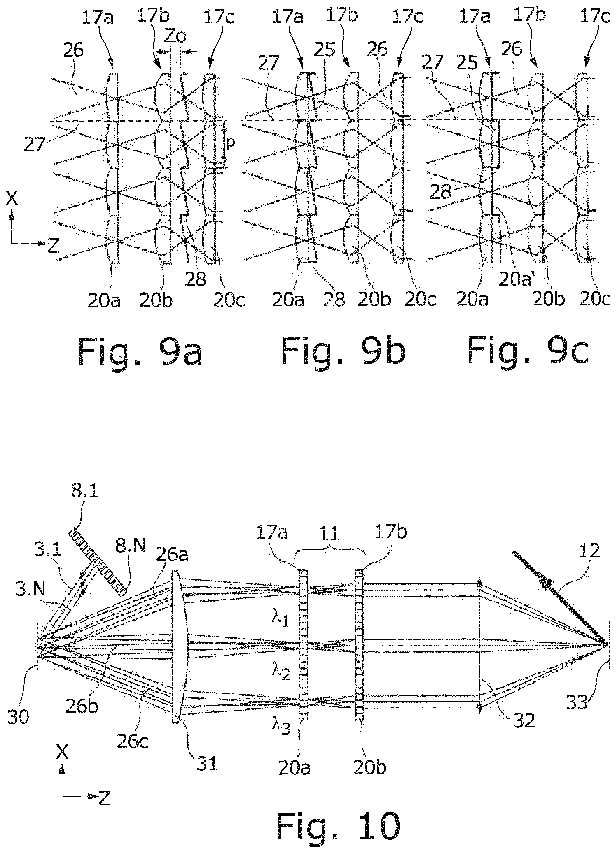

Bei den weiter oben beschriebenen Beispielen wurde eine ungerade Anzahl N von kohärenten Laserstrahlen 3.1, ..., 3.3 überlagert. Für den Fall, dass eine gerade Anzahl N von Laserstrahlen 3.1, ..., 3.N überlagert werden soll, kann eine Phasenschiebe-Einrichtung 25 verwendet werden, wie nachfolgend anhand von **Fig. 9a****-c** beschrieben wird. Die Phasenschiebe-Einrichtung 25 ist hierbei in ein jeweiliges erstes bzw. zweites Mikrolinsen-Array 17a,b der Mikrolinsenanordnung 11 integriert und erzeugt an einem Übergang 27 zwischen Strahlenbündeln 26, die benachbarte Mikrolinsen 20b des zweiten Mikrolinsen-Arrays 17b (vgl. Fig. 9a) bzw. benachbarte Mikrolinsen 20a des ersten Mikrolinsen-Arrays 17a (vgl. Fig. 9b,c) durchlaufen, jeweils einen Phasenversatz von π. Dadurch kann die 0-te Beugungsordnung durch destruktive Interferenz eliminiert werden, so dass eine gerade Anzahl N von kohärenten Laserstrahlen 3.1, ..., 3.N zu dem kombinierten Laserstrahl 12 kombiniert werden kann.

Bei der in Fig. 9a gezeigten Mikrolinsenanordnung 11 ist ein Dickensprung 28 am Übergang zwischen benachbarten Mikrolinsen 20b des zweiten Mikrolinsen-Arrays 17b vorgesehen. Die zusätzliche Dicke einer jeweiligen Mikrolinse 20b entlang der X-Richtung nimmt hier linear zu von einem Ausgangswert z0 zusätzlicher Dicke bis zu einer zusätzlichen Dicke entsprechend z0 plus der Dicke entsprechend der Phasendifferenz π über die Breite bzw. den Rasterabstand p der jeweiligen Mikrolinse 20b. Der Ausgangswert z0 dient dazu, den Ort des Phasensprungs bezüglich der X-Richtung näherungsweise an die Fokusebene hinter dem dritten Mikrolinsen-Array 17c zu bringen. Die Sägezahn-Profilierung ist bei allen Mikrolinsen 20b des zweiten Mikrolinsen-Arrays 17b vorgesehen.

Bei der Mikrolinsenanordnung 11 von Fig. 9b ist die Phasenschiebe-Einrichtung 25 in das erste Mikrolinsen-Array 17a integriert und es findet am Übergang 27 benachbarter Mikrolinsen 20a ebenfalls ein Dickensprung 28 statt. Die zusätzliche Dicke einer jeweiligen Mikrolinse 20a entlang der X-Richtung nimmt linear von 0 (null) zusätzlicher Dicke bis zu einer zusätzlichen Dicke entsprechend der Phasendifferenz π über die Breite der Mikrolinse 20a zu. Diese Sägezahn-Profilierung ist bei allen Mikrolinsen 20a des ersten Mikrolinsen-Arrays 17a vorgesehen.

Bei der in Fig. 9c gezeigten Variante ist ebenfalls das erste Mikrolinsen-Array 17a mit einer integrierten Phasenschiebe-Einrichtung 25 versehen. Am Übergang 27 zwischen benachbarten Mikrolinsen 20a findet hier ein Dickensprung 28 statt, der den Phasenversatz von π erzeugt. Die durch die integrierte Phasenschiebe-Einrichtung 25 vorgesehene zusätzliche Dicke wird über die ganze Breite einer jeweiligen Mikrolinse 20a gleichmäßig beibehalten, und bei alternierenden Mikrolinsen 20a' des ersten Mikrolinsen-Arrays 17a fehlt diese zusätzliche Dicke.

Alternativ zu der in Fig. 9a-c gezeigten Phasenschiebe-Einrichtung 25, welche in ein jeweiliges Mikrolinsen-Array 17a,b integriert ist, kann die Phasenschiebe-Einrichtung 25 als separates Bauteil z.B. in Form einer Phasenschieber-Platte ausgebildet sein. Eine solche (nicht bildlich dargestellte) Phasenschieber-Platte weist alternierend erste und zweite Passierelemente auf, die mit den Mikrolinsen 20a-c bzw. den zugehörigen Strahlenbündeln 26 fluchten. Die Passierelemente weisen somit eine Breite in X-Richtung entsprechend der Apertur bzw. des Rasterabstands p auf. Die ersten Passierelemente erzeugen hier einen Phasenversatz von 0 (null) über ihre gesamte Breite in X-Richtung und die zweiten Passierelemente erzeugen hier einen Phasenversatz von π über ihre gesamte Breite in X-Richtung.

Das Phasenschiebe-Einrichtung 25 kann in diesem Fall bei Bedarf aus dem Strahlengang herausgenommen werden (etwa in X-Richtung herausgezogen werden) oder wieder in den Strahlengang eingefahren werden, je nachdem ob eine ungerade oder gerade Zahl N von Laserstrahlen 3.1, ..., 3.N kohärent kombiniert werden soll. Hierfür kann auch eine motorisierte Verstellmechanik vorgesehen werden, die mit Hilfe der elektronischen Steuerungseinrichtung 15 angesteuert wird. Allgemein wird die Phasenschiebe-Einrichtung 25 bevorzugt näherungsweise in die Fokusebene eines jeweiligen Mikrolinsen-Arrays 17a-c (bzw. einer jeweiligen Subapertur) gelegt, oder aber direkt hinter das erste Mikrolinsen-Array 17c des von den Emissionsflächen 8.1, ..., 8.N ausgehenden Strahlengangs.

**Fig. 10** zeigt eine Vorrichtung 16 der Fig. 1, welche zur wellenlängenabhängigen Korrektur bei der Überlagerung von Ultrakurzpuls-Laserstrahlen 3.1, .., 3.N ausgebildet ist. Die Vorrichtung 16 weist eine Anzahl von Emissionsflächen 8.1, ..., 8.N zur Emission der kohärenten Laserstrahlen 3.1, ..., 3.N auf, von denen in Fig. 10 zur Vereinfachung lediglich drei Laserstrahlen 3.1, 3.2, 3.3 dargestellt sind, die auf ein erstes wellenlängendispersives Element in Form eines ersten Beugungsgitters 30 treffen. An dem ersten Beugungsgitter 30 werden die Laserstahlen 3.1, 3.2, 3.3 spektral aufgespalten und bilden im gezeigten Beispiel drei Strahlenbündel 26a-c mit jeweils unterschiedlichen Wellenlängen λ₁, λ₂, λ₃. Die drei Strahlenbündel 26a-c durchlaufen eine Kollimationslinse 31 und treten nachfolgend parallel ausgerichtet durch die Mikrolinsenanordnung 11 hindurch. Die drei Strahlenbündel 26a-c durchlaufen hierbei die beiden Mikrolinsen-Arrays 17a,b der Mikrolinsenanordnung 11 durch jeweils unterschiedliche Mikrolinsen 20a, 20b des jeweiligen Mikrolinsen-Arrays 17a,b und somit getrennt. Eine im Strahlengang hinter der Mikrolinsenanordnung 11 positionierte Fokussierlinse 32 fokussiert die Strahlenbündel 26a-c auf ein zweites wellenlängendispersives optisches Element in Form eines zweiten Beugungsgitters 33, welches die Strahlenbündel 26a-c spektral zusammenführt und den kombinierten Laserstrahl 12 erzeugt, dessen WellenlängenSpektrum mit dem der kohärenten Laserstrahlen 3.1, 3.2, 3.3 vor der Überlagerung übereinstimmt.

Im gezeigten Beispiel wird die Einkoppeloptik 18 durch die Kollimationslinse 31 gebildet, die als asphärische Linse ausgebildet ist und eine in X-Richtung, d.h. quer zur Ausbreitungsrichtung der Strahlenbündel 26a-c, lokal veränderliche Krümmung aufweist. Die Krümmung der asphärischen Kollimationslinse 31 ist hierbei ortsabhängig derart gewählt, dass eine wellenlängenabhängige Korrektur der Phasenfront bei der Kombination der UKP-Laserstrahlen 3.1, 3.2, 3.3 erfolgen kann. Eine solche wellenlängenabhängige Korrektur ist in der Regel jedoch lediglich für den Fall erforderlich, dass eine vergleichsweise große Anzahl von UKP-Laserstrahlen 3.1, ..., 3.N (z.B. mit N >10) kohärent überlagert werden soll.

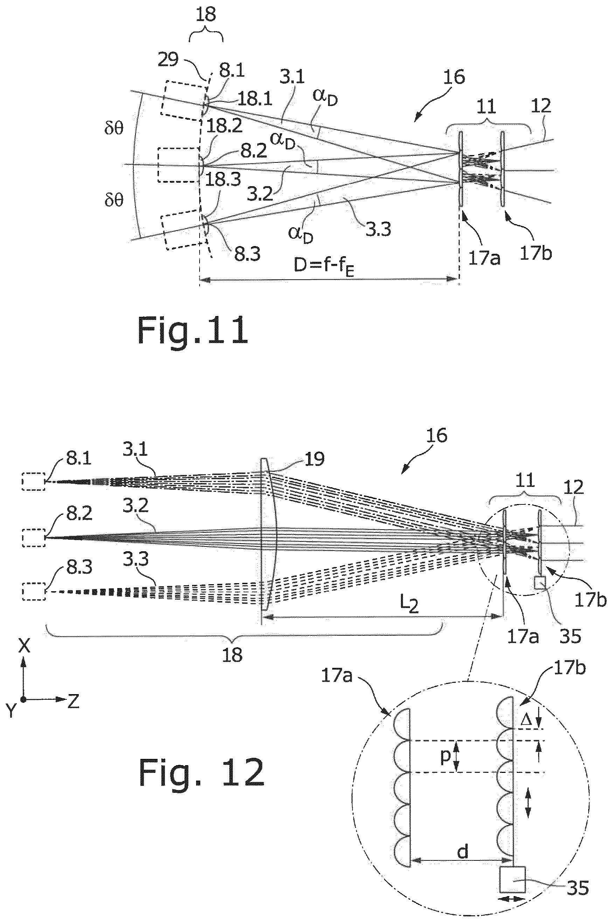

Fig. 11 zeigt eine Vorrichtung 16 der Fig. 1 analog zu Fig. 7, bei welcher die Emissionsflächen 8.1, 8.2, 8.3 auf einem Kreisbogen 29 angeordnet sind. Wie weiter oben in Zusammenhang mit Fig. 7 beschrieben wurde, sind die Emissionsflächen 8.1, 8.2, 8.3 unter einem jeweiligen Differenzwinkel δθ = λ_{L} / p zueinander ausgerichtet. Die Einkoppeloptik 18 weist drei strahlformende Optiken in Form von drei Linsen 18a-c auf, die an der Auskoppeleinheit der Emitterflächen 8.1, 8.2, 8.3 angebracht sind. Die Linsen 18a-c dienen zur Erzeugung eines vorgegebenen Divergenz-Winkels α_{D} mit dem der kohärenten Laserstrahlen 3.1, 3.2, 3.3 in die Mikrolinsenanordnung 11 eintreten. Für den Fall, dass Linsen 18a-c jeweils dieselbe Brennweite f aufweisen, gilt für den Abstand D zwischen dem Kreisbogen 29 und der Mikrolinsenanordnung 11 die Bedingung D = f - f_{E}, wobei f_{E} die effektive Brennweite der Mikrolinsenanordnung 11 bezeichnet. Durch die Strahlaufweitung mit Hilfe der Linsen 18a-c oder mit Hilfe einer anderen stahlformenden Optik, beispielsweise mit Hilfe von zwei oder mehr hintereinander angeordneten Linsen, kann der Abstand D gegenüber dem Fall, dass eine Fourier-Linse bzw. Fokussiereinrichtung 19 (vgl. Fig. 6) mit (größerer) Brennweite f₂ verwendet wird (L2 = f₂ - f_{E} = f₂ - p² / (λ_{L} N)) reduziert werden und der Aufbau der Vorrichtung 16 insgesamt kompakter realisiert werden, was die Störanfälligkeit senkt.

Durch gezieltes Vorgeben der Divergenz-Winkel α_{D} der kohärenten Laserstrahlen 3.1, 3.2, 3.3 kann die Interferenzbedingung nicht nur so verändert werden, dass kürzere Bauabstände realisiert werden, es kann vielmehr auch eine gerade bzw. beliebige Anzahl von kohärenten Laserstrahlen 3.1, 3.2, 3.3, ... kombiniert werden, ohne dass zu diesem Zweck die weiter oben in Zusammenhang mit Fig. 9a-c beschriebene Phasenschiebe-Einrichtung 25 benötigt wird.

Für die Kombination einer geraden Anzahl N von kohärenten Laserstrahlen 3.1, 3.2, 3.3, ... ist es erforderlich, dass die strahlformende Optik 18a-c, genauer gesagt die Linsen 18a-c, eine Brennweite f aufweisen, die folgende Bedingung erfüllt: $f = {p}^{2} / {λ}_{L} ,$ und zwar unabhängig davon, wie groß die (gerade) Anzahl N an kohärenten Laserstrahlen 3.1, 3.2, 3.3,... ist. Die obige Bedingung an die Brennweite f stellt auch eine untere Grenze dar, die bei dem in Fig. 11 gezeigten Aufbau nicht unterschritten werden darf, d.h. für die Brennweite f sollte allgemein (d.h. unabhängig von der Anzahl N) gelten: f = p²/ λ_{L}.

Für den Fall, dass die Anzahl der zu kombinierenden Laserstrahlen 3.1, 3.2, ... variiert werden soll, kann die Einkoppeloptik 18 in Form der strahlformenden Optik zur Einstellung eines variablen Divergenz-Winkels α_{D} ausgebildet sein und zu diesem Zweck beispielsweise eine einstellbare Brennweite f aufweisen.

Die Kombination einer geraden Anzahl von kohärenten Laserstrahlen 3.1, 3.2, ... zu einem kombinierten Laserstrahl 12 ist nicht nur bei der in Fig. 11 gezeigten Vorrichtung 16 möglich, sondern auch bei der in Fig. 12 gezeigten Vorrichtung 16 der Fig. 1, die im Wesentlichen der in Fig. 6 gezeigten Vorrichtung 16 entspricht. Die in Fig. 12 gezeigte Vorrichtung 16 weist eine Bewegungseinrichtung 35 auf, um das zweite Mikrolinsen-Array 17b in X-Richtung, d.h. lateral bzw. quer zur Propagationsrichtung Z des kombinierten Laserstrahls 12 zu verschieben, wodurch ein einstellbarer lateraler Versatz Δ zwischen den Mikrolinsen des ersten Mikrolinsen-Arrays 17a und den Mikrolinsen des zweiten Mikrolinsen-Arrays 17b erzeugt wird, wie dies in Fig. 12 zu erkennen ist.

Die Bewegungseinrichtung 35 kann zu diesem Zweck beispielsweise ein mittels der Steuerungseinrichtung 15 ansteuerbares Piezoelement, eine Voice Coil, einen mechanischen Antrieb einschließlich einer Nockenwelle, etc. aufweisen. Die Steuerungseinrichtung 15 kann in Form eines Steuerungs-Computers oder in Form von anderer geeigneter Hard- und/oder Software ausgebildet sein und steuert die Bewegungseinrichtung 25 an, um das zweite Mikrolinsen-Array 17b lateral zu verschieben.

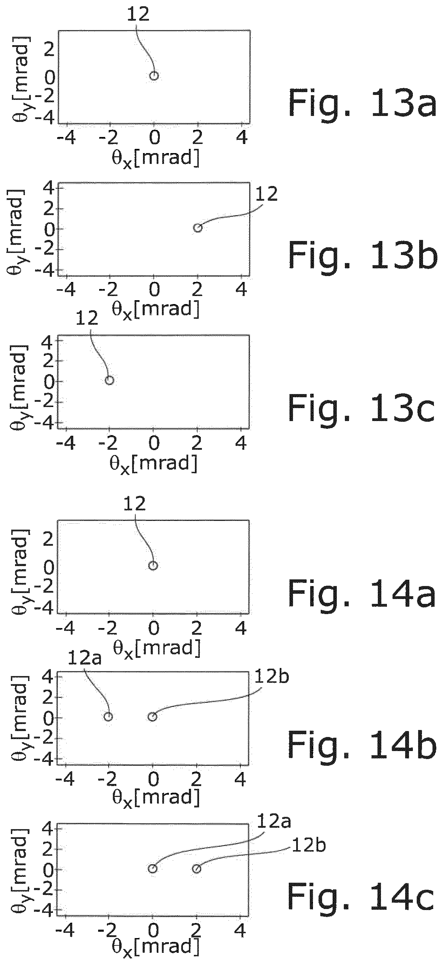

Die in Fig. 12 gezeigte Vorrichtung 16 kann auch dazu verwendet werden, um den kombinierten Laserstrahl 12 in seiner Position zu verschieben bzw. seinen Winkel zu verändern oder um bei der Kombination zwei oder ggf. mehr als zwei kombinierte Laserstrahlen 12a, 12b zu erzeugen, wie dies nachfolgend in Zusammenhang mit Fig. 13a-c und Fig. 14a-c beschrieben wird, in denen jeweils die Winkelverteilung des Fernfeldes in einer Ebene X, Y senkrecht zur Propagationsrichtung Z des kombinierten Laserstrahls 12 dargestellt ist.

Fig. 13a zeigt den Fall, dass kein lateraler Versatz Δ zwischen den beiden Mikrolinsen-Arrays 17a,b erzeugt wird, d.h. dass gilt: Δ = 0 mm. In diesem Fall wird der kombinierte Laserstrahl 12 in die 0. Beugungsordnung gebeugt, so dass dieser nicht abgelenkt wird und entlang der optischen Achse in Z-Richtung propagiert. Fig. 13b zeigt den Fall, dass mit Hilfe der Bewegungseinrichtung 35 ein positiver lateraler Versatz Δ (Verschiebung in positive X-Richtung, vgl. Fig. 12) eingestellt wird, für den im vorliegend beschriebenen Fall von drei Laserstrahlen 3.1, 3.2, 3.3 gilt: Δ = p / N x B = p / 3 (hier: N = 3, B = +1). Der kombinierte Laserstrahl 12 wird in die +1. Beugungsordnung abgelenkt und propagiert somit nicht entlang der optischen Achse in Z-Richtung, sondern wird unter einem Winkel θ_{X} von ca. +2 mrad in die positive X-Richtung abgelenkt. Fig. 13c zeigt den analogen Fall, wenn ein lateraler Versatz Δ mit negativem Vorzeichen (Δ = - p / N x B = - p /3 (hier: N = 3, B = - 1)) erzeugt wird, um den kombinierten Laserstrahl 12 in die -1. Beugungsordnung abzulenken, so dass dieser unter einem Winkel θ_{X} von ca. -2 mrad in die negative X-Richtung abgelenkt wird.

Fig. 14a zeigt den zu Fig. 13a analogen Fall, dass kein lateraler Versatz Δ zwischen den beiden Mikrolinsen-Arrays 17a,b erzeugt wird, d.h. dass gilt: Δ = 0 mm, so dass der kombinierte Laserstrahl 12 nicht abgelenkt wird und entlang der optischen Achse in Z-Richtung propagiert. Fig. 14b zeigt den Fall, dass mit Hilfe der Bewegungseinrichtung 35 ein positiver lateraler Versatz Δ (Verschiebung in positive X-Richtung, vgl. Fig. 12) eingestellt wird, für den im vorliegend beschriebenen Fall von drei Laserstrahlen 3.1, 3.2, 3.3 gilt: Δ = + p / (2 N) = p / 6 (hier: N = 3). Bei einer solchen Wahl des lateralen Versatzes Δ wird der kombinierte Laserstrahl 12 geteilt, genauer gesagt werden zwei kombinierte Laserstrahlen 12a, 12b mit gleicher Leistung erzeugt, von denen der erste Laserstrahl 12a wie in Fig. 14a in Z-Richtung propagiert, während der zweite Laserstrahl 12b in die -1. Beugungsordnung gebeugt wird. Entsprechend wird bei dem in Fig. 14c gezeigten Beispiel ein negativer lateraler Versatz Δ (Verschiebung in negative X-Richtung) eingestellt, für den im vorliegend beschriebenen Fall von drei Laserstrahlen 3.1, 3.2, 3.3 gilt: Δ = - p / (2 N) = - p / 6 (hier: N = 3). Auch in diesem Fall werden zwei kombinierte Laserstrahlen 12a, 12b mit gleicher Leistung erzeugt, von denen der erste Laserstrahl 12a wie in Fig. 14a in Z-Richtung propagiert, während der zweite Laserstrahl 12b in die +1. Beugungsordnung gebeugt wird.

Bei geeigneter Wahl des Betrags des lateralen Versatzes Δ kann die in Fig. 13b,c gezeigte Ablenkung auch mit der in Fig. 14b,c gezeigten Aufteilung bzw. Bildung von zwei oder ggf. mehr als zwei kombinierten Laserstrahlen 12a, 12b,... kombiniert werden. Auch in diesem Fall kann die Laserenergie und die Strahlqualität der kohärenten Laserstrahlen 8.1, 8.2, 8.3 weitgehend erhalten bleiben, d.h. die Verluste liegen selbst bei einer Beugung in die 2. Beugungsordnung lediglich bei ca. 10%. Es versteht sich, dass auch mehr als drei Laserstrahlen 3.1, 3.2, 3.3 auf die weiter oben beschriebene Weise abgelenkt bzw. aufgeteilt werden können, die von einer Laserquelle 2 oder ggf. von mehreren kohärenten Laserquellen 2 stammen.

Mit Hilfe der in Fig. 12 gezeigten Vorrichtung 16 kann auch eine gerade Anzahl N von kohärenten Laserstrahlen 3.1, 3.2, ... zu einem kombinierten Laserstrahl 12 kombiniert werden, ohne dass zu diesem Zweck die weiter oben beschriebene Phasenschiebe-Einrichtung 25 eingesetzt werden muss. Zu diesem Zweck wird ein lateraler Versatz Δ eingestellt, für den gilt: $Δ = \pm p / \left(2 N+1\right) ,$ wobei N + 1 die (ungerade) Anzahl der kohärenten Laserstrahlen 3.1, 3.2, ... bezeichnet, die mittels der Vorrichtung 16 zu einem kombinierten Laserstrahl 12 kombiniert werden kann. Für den in Fig. 12 gezeigten Abstand d zwischen dem ersten Mikrolinsen-Array 17a und dem zweiten Mikrolinsen-Array 17b gilt in diesem Fall: $d = {p}^{2} / \left(N {λ}_{L}\right) .$

Der Abstand d zwischen dem ersten und dem zweiten Mikrolinsen-Array 17a, 17b kann konstant sein. Alternativ kann der Abstand d einstellbar sein. Zu diesem Zweck kann z.B. das zweite Mikrolinsen-Array 17b von einem Schlitten getragen werden, dessen Position in Z-Richtung über eine motorische Verstellmechanik mit Hilfe der programmierbaren Steuerungseinrichtung 15 eingestellt wird, wie dies weiter oben in Zusammenhang mit Fig. 3a,b dargestellt ist.

Für den Fall, dass eine Mehrzahl von Laserstrahlen 3.1.1 bis 3.N.M zweidimensional kombiniert wird, wie dies weiter oben in Zusammenhang mit Fig. 8a,b beschrieben ist, kann bei der in Fig. 8b dargestellten Mikrolinsenanordnung 11, die zwei Paare von gekreuzten, eindimensionalen Mikrolinsenarrays 17a-d aufweist, die Bewegungseinrichtung 35 ausgebildet sein, einen lateralen Versatz Δ_{X} in X-Richtung und unabhängig davon einen lateralen Versatz Δ_{Y} in Y-Richtung einzustellen. Zu diesem Zweck kann die Bewegungseinrichtung 35 beispielsweise auf das erste Mikrolinsen-Array 17a einwirken, um dieses in X-Richtung lateral zu versetzen und entsprechend auf das zweite Mikrolinsen-Array 17b, um dieses in Y-Richtung lateral zu versetzen. Auf diese Weise kann die Ablenkung bzw. die Kombination zu zwei Laserstrahlen 12a,b in beiden Richtungen (X, Y) unabhängig voneinander erfolgen.

Für den Fall, dass für die zweidimensionale Kombination der kohärenten Laserstrahlen 3.1.1 bis 3.N.M zweidimensional strukturierte Mikrolinsen-Arrays 17a, 17b verwendet werden, wie dies in Fig. 8a,b gezeigt ist, ist hingegen keine unabhängige Einstellung in zwei Richtungen möglich. Wird ein solches zweidimensional strukturiertes Mikrolinsen-Array, z.B. das erste Mikrolinsen-Array 17a, in einer Richtung (z.B. X-Richtung) lateral versetzt, wird der kombinierte Laserstrahl 12 auch in der zweiten Richtung (z.B. Y-Richtung) abgelenkt bzw. es werden an Stelle von zwei kombinierten Laserstrahlen 12a,b vier kombinierte Laserstrahlen gebildet.

Zusammenfassend kann auf die weiter oben beschriebene Weise eine kohärente Kombination einer Mehrzahl N von Laserstrahlen 3.1, ..., 3.N mit Hilfe von Standard-Optiken, d.h. - mit Ausnahme des in Fig. 10 gezeigten Beispiels - ohne die Verwendung von diffraktiven optischen Elementen oder dergleichen erfolgen. Durch eine geeignete Wahl der Brennweiten fₐ, f_{b}, f_{C} der Mikrolinsen 20a-c der Mikrolinsen-Arrays 17a-c, ggf. in Kombination mit einer geeigneten Wahl der Brennweite(n) f₂, f₁ von optischen Elementen 19, 21 der Einkoppeloptik 18, sowie durch eine geeignete Wahl der relativen Phasen δφₙ(x) der Laserstrahlen 3.1, ..., 3.N kann eine hohe Effizienz bei der kohärenten Kombination zu dem kombinierten Laserstrahl 12 unter gleichzeitiger Erhaltung der Strahlqualität erreicht werden.

## Patentansprüche

1. Lasersystem (1), umfassend:
mindestens eine Laserquelle (2) zur Erzeugung einer Mehrzahl N von kohärenten Laserstrahlen (3.1, ..., 3.N), eine Mehrzahl von Emissionsflächen (8.1, ..., 8.N) zur Emission der Mehrzahl von kohärenten Laserstrahlen (3.1, ..., 3.N), wobei die Mehrzahl von Emissionsflächen (8.1, ..., 8.N), sowie eine Vorrichtung (16) zur Kombination der Mehrzahl N von kohärenten Laserstrahlen (3.1, ..., 3.N), welche mindestens N-1 Phasen-Einstelleinrichtungen (6.1, ..., 6.N) zur Einstellung einer jeweiligen Phase (δφₙ) eines der kohärenten Laserstrahlen (3.1, ..., 3.N) sowie eine Strahlkombinationseinrichtung (10) zur Kombination der kohärenten Laserstrahlen (3.1, ..., 3.N) zur Bildung mindestens eines kombinierten Laserstrahls (12; 12a,b) umfasst,
wobei die Strahlkombinationseinrichtung (10) eine Mikrolinsenanordnung (11) mit mindestens zwei hintereinander angeordneten Mikrolinsen-Arrays (17a,b; 17a-c) zur Bildung des mindestens einen kombinierten Laserstrahls (12, 12a,b) aufweist,
wobei die Mikrolinsen (20a,b; 20a-c) eines jeweiligen Mikrolinsenarrays (17a,b; 17a-c) in einer Richtung (X) angeordnet sind, wobei die Mehrzahl von Emissionsflächen (8.1, ..., 8.N) äquidistant entlang der Richtung (X) oder äquidistant auf einem Kreisbogen (25) und in einer gemeinsamen Ebene mit den Mikrolinsen eines jeweiligen Mikrolinsen-Arrays angeordnet sind, **dadurch gekennzeichnet**
**dass** die kohärenten Laserstrahlen (3.1, ..., 3.N) und die Mikrolinsenanordnung (11) die folgende Bedingung erfüllen: $N = {p}^{2} / \left({λ}_{L} {f}_{E}\right) ,$
wobei N die Anzahl der kohärenten Laserstrahlen (3.1, ..., 3.N), p einen identischen Rasterabstand der Mikrolinsen (20a,b; 20a-c) eines jeweiligen Mikrolinsen-Arrays (17a,b; 17a-c), λ_{L} die Laserwellenlänge und f_{E} die Brennweite der Mikrolinsenanordnung (11) bezeichnen, wobei die Phasen-Einstelleinrichtungen (6.1, ..., 6.N) ausgebildet sind, für den n-ten kohärenten Laserstrahl (3.1, ..., 3.N) eine Phase δφₙ einzustellen, die gegeben ist durch: ${δφ}_{n} = - \left(2 π/{λ}_{L}\right) {f}_{E} {\left({m}_{n} {λ}_{L}/p\right)}^{2} ,$
wobei gilt: ${m}_{n} = - \frac{\left(N+1\right)}{2} + n$*.*

2. Lasersystem (1) nach Anspruch 1, bei welcher die Mikrolinsenanordnung (11) mindestens drei Mikrolinsen-Arrays (17a-c) aufweist und zur Einstellung ihrer Brennweite (f_{E}) ausgebildet ist, wobei bevorzugt die Mikrolinsenanordnung (11) ausgebildet ist, zur Einstellung ihrer Brennweite (f_{E}) einen Abstand (d₁, d₂) zwischen mindestens einem ersten Mikrolinsen-Array (17a, 17b) und einem zweiten Mikrolinsen-Array (17b, 17c) zu verändern.

3. Lasersystem (1) nach Anspruch 1 oder 2, weiter umfassend: eine Bewegungseinrichtung (35) zur Erzeugung eines bevorzugt einstellbaren lateralen Versatzes (Δ) zwischen mindestens einem ersten Mikrolinsen-Array (17a) und mindestens einem zweiten Mikrolinsen-Array (17b) der Mikrolinsenanordnung (11).

4. Lasersystem (1) nach einem der vorhergehenden Ansprüche, bei welcher ein erstes und ein zweites Mikrolinsen-Array (17a,b) zur Bildung von zwei kombinierten Laserstrahlen (12a,b) einen lateralen Versatz Δ aufweisen, für den gilt: $Δ = \pm p / \left(2 N\right) .$

5. Lasersystem (1) nach einem der Ansprüche 1 bis 3, bei welcher ein erstes und ein zweites Mikrolinsen-Array (17a,b) der mindestens zwei Mikrolinsen-Arrays zur Kombination einer geraden Anzahl N von kohärenten Laserstrahlen (3.1, ..., 3.N) zu einem kombinierten Laserstrahl (12) einen lateralen Versatz Δ aufweisen, für den gilt: $Δ = \pm p / \left(2 N+1\right) ,$ wobei für einen bevorzugt einstellbaren Abstand d zwischen dem ersten Mikrolinsen-Array (17a) und dem zweiten Mikrolinsen-Array (17b) gilt: $d = {p}^{2} / \left(N {λ}_{L}\right) .$

6. Lasersystem (1) nach einem der Ansprüche 1 bis 3, bei welcher das erste und das zweite Mikrolinsen-Array (17a,b) zur Bildung eines in eine von Null verschiedene Beugungsordnung B gebeugten kombinierten Laserstrahls (12) einen lateralen Versatz Δ aufweisen, für den gilt: $Δ = p / N B .$

7. Lasersystem (1) nach einem der vorhergehenden Ansprüche, weiter umfassend: eine Einkoppeloptik (18) zur Einkopplung der kohärenten Laserstrahlen (3.1, ..., 3.N) in die Mikrolinsenanordnung (11), wobei die Einkoppeloptik (18) bevorzugt ausgebildet ist, benachbarte kohärente Laserstrahlen (3.1, 3.2; 3.2, 3.3) mit einer vorgegebenen Winkeldifferenz δθ in die Mikrolinsenanordnung (11) einzukoppeln, für die gilt: $δθ = {λ}_{L} / p .$

8. Lasersystem (1) nach Anspruch 7, bei welcher die Einkoppeloptik (18) mindestens eine Fokussiereinrichtung, insbesondere mindestens eine Fokussierlinse (19), zur Fokussierung der Mehrzahl von kohärenten Laserstrahlen (3.1, ..., 3.N) auf die Mikrolinsenanordnung (11) aufweist, wobei bevorzugt die Einkoppeloptik (18) zur Korrektur einer Phasenfront (δφₙ(x)) der Mehrzahl von kohärenten Laserstrahlen (3.1, ..., 3.N) mindestens eine weitere abbildende Optik, insbesondere mindestens eine weitere Linse (21, 21a,b), umfasst.

9. Lasersystem (1) nach einem der vorhergehenden Ansprüche, wobei die kohärenten Laserstrahlen (3.1, ..., 3.N) ein gauß-förmiges Strahlprofil, ein Doughnut-förmiges Strahlprofil oder ein Top-Hat Strahlprofil aufweisen.

10. Lasersystem nach einem der vorhergehenden Ansprüche, weiter umfassend: eine Steuerungseinrichtung (15), die ausgebildet ist, die Brennweite (f_{E}) der Mikrolinsenanordnung (11) in Abhängigkeit von der Anzahl N der kohärenten Laserstrahlen (3.1, ..., 3.N) einzustellen.

11. Lasersystem nach Anspruch 10 und Anspruch 8, bei dem ein Abstand (L2) zwischen der Fokussiereinrichtung (19) und der Mikrolinsenanordnung (11) einstellbar ist, und bei dem die Steuerungseinrichtung (15) ausgebildet ist, den Abstand (L2) in Abhängigkeit von der Anzahl N der kohärenten Laserstrahlen (3.1, ..., 3.N) einzustellen.

12. Lasersystem nach Anspruch 8, bei welcher die Fokussiereinrichtung (19) im Abstand (L2) ihrer Brennweite f₂ von einem ersten Mikrolinsen-Array (17a) der Mikrolinsenanordnung (11) angeordnet ist und die Brennweite f₂ der Fokussiereinrichtung (19), eine Brennweite f₁ einer weiteren abbildenden Optik (21) und die Brennweite f_{E} der Mikrolinsenanordnung (11) folgende Bedingung erfüllen: ${f}_{1} = - {{f}_{2}}^{2} / {f}_{E} .$

13. Lasersystem nach Anspruch 12 und Anspruch 10, bei welcher die Brennweite (f₁) der weiteren abbildenden Optik (21) einstellbar ist und die Steuerungseinrichtung (15) ausgebildet ist, die Brennweite (f₁) der weiteren abbildenden Optik (21) in Abhängigkeit von der Anzahl N der kohärenten Laserstrahlen (3.1, ..., 3.N) einzustellen.

14. Lasersystem nach Anspruch 8, bei welchem benachbarte Emissionsflächen (8.1, ..., 8.N) äquidistant entlang der Richtung (X) angeordnet sind und einen Abstand δx voneinander aufweisen, der gegeben ist durch $δx = {λ}_{L} {f}_{2} / p .$

15. Lasersystem nach einem der Ansprüche 1 bis 13, bei dem benachbarte Emissionsflächen (8.1, ..., 8.N) äquidistant auf dem Kreisbogen (25) angeordnet und ausgerichtet sind, benachbarte kohärente Laserstrahlen (3.1, 3.2; 3.2, 3.3) mit einer vorgegebenen Winkeldifferenz δθ in die Mikrolinsenanordnung (11) einzukoppeln, für die gilt: $δθ = {λ}_{L} / p .$

16. Lasersystem nach Anspruch 7, bei dem die Einkoppeloptik eine strahlformende Optik (18) zur Formung eines jeweiligen kohärenten Laserstrahls (3.1, ..., 3.N) mit einem vorgegebenen, insbesondere einstellbaren Divergenz-Winkel (α_{D}) bei der Einkopplung in die Mikrolinsenanordnung (11) aufweist oder bildet.

17. Lasersystem nach Anspruch 16, welches eine gerade Anzahl N von Emissionsflächen (8.1, ..., 8.N) aufweist, wobei die strahlformende Optik (18) eine Brennweite f aufweist, die folgende Bedingung erfüllt: $f = {p}^{2} / {λ}_{L} .$

18. Lasersystem nach einem der vorhergehenden Ansprüche, welches eine gerade Anzahl N von Emissionsflächen (8.1, ..., 8.N) aufweist, wobei die Mikrolinsenanordnung (11) eine Phasenschiebe-Einrichtung (25) aufweist, die zur Erzeugung eines konstanten Phasenversatzes von π zwischen Strahlenbündeln (26) der kohärenten Laserstrahlen (3.1, ..., 3.N) ausgebildet ist, die benachbarte Mikrolinsen (20a,b; 20a-c) eines jeweiligen Mikrolinsen-Arrays (17a,b; 17a-c) durchlaufen.

19. Lasersystem nach einem der vorhergehenden Ansprüche, weiter umfassend:
ein erstes, vor der Mikrolinsenanordnung (11) angeordnetes wellenlängendispersives Element, insbesondere ein erstes Beugungsgitter (30),
zur spektralen Aufspaltung der kohärenten Laserstrahlen (3.1, ..., 3.N) auf mehrere Strahlenbündel (26a-c), welche die Mikrolinsenanordnung (11) getrennt durchlaufen, sowie
ein zweites, nach der Mikrolinsenanordnung (11) angeordnetes wellenlängendispersives optisches Element, insbesondere ein zweites Beugungsgitter (33), zur spektralen Zusammenführung der Strahlenbündel (26a-c) zur Bildung des kombinierten Laserstrahls (12) mit einer Wellenlänge (λ_{L}).

20. Lasersystem nach Anspruch 19 und Anspruch 7, bei welchem die Einkoppeloptik (18) eine Kollimationslinse (31) aufweist, die als asphärische Linse ausgebildet ist.

21. Lasersystem (1), umfassend:
mindestens eine Laserquelle (2) zur Erzeugung einer Mehrzahl N x M von kohärenten Laserstrahlen (3.1, ..., 3.N), eine Mehrzahl von Emissionsflächen (8.1, ..., 8.N) zur Emission der Mehrzahl von kohärenten Laserstrahlen (3.1, ..., 3.N), wobei die Mehrzahl von Emissionsflächen (8.1, ..., 8.N) in einem zweidimensionalen periodischen Gitter entlang einer ersten Richtung (X) und
einer zweiten Richtung (Y), die senkrecht zu der ersten Richtung (X) ist, angeordnet sind, sowie eine Vorrichtung (16) zur Kombination der Mehrzahl N x M von kohärenten Laserstrahlen (3.1, ..., 3.N), welche mindestens (N x M) -1 Phasen-Einstelleinrichtungen (6.1, ..., 6.N) zur Einstellung einer jeweiligen Phase (δφ_{n,m}) eines der kohärenten Laserstrahlen (3.1, ..., 3.N) sowie eine Strahlkombinationseinrichtung (10) zur Kombination der kohärenten Laserstrahlen (3.1, ..., 3.N) zur Bildung mindestens eines kombinierten Laserstrahls (12; 12a,b) umfasst,
wobei die Strahlkombinationseinrichtung (10) eine Mikrolinsenanordnung (11) mit mindestens zwei hintereinander angeordneten Mikrolinsen-Arrays (17a,b; 17a-c) zur Bildung des mindestens einen kombinierten Laserstrahls (12, 12a,b) aufweist,
wobei die Mikrolinsen (20a, 20b) eines jeweiligen Mikrolinsen-Arrays (17a,b; 17a-c) jeweils in einem zweidimensionalen periodischen Gitter angeordnet sind, **dadurch gekennzeichnet, dass** die kohärenten Laserstrahlen (3.1, ..., 3.N) und
die Mikrolinsenanordnung (11) die folgende Bedingung erfüllen: $N = {{p}_{x}}^{2} / \left({λ}_{L} {f}_{E , X}\right) ,$ $M = {{p}_{y}}^{2} / \left({λ}_{L} {f}_{E , Y}\right) ,$
wobei N die Anzahl der kohärenten Laserstrahlen (3.1, ..., 3.N) entlang der ersten Richtung (X), M die Anzahl der kohärenten Laserstrahlen (3.1, ..., 3.N) entlang der zweiten Richtung (Y), pₓ einen identischen Rasterabstand der Mikrolinsen (20a,b; 20a-c) eines jeweiligen Mikrolinsen-Arrays (17a,b; 17a-c) in der ersten Richtung (X), p_{y} einen identischen Rasterabstand der Mikrolinsen (20a,b; 20a-c) eines jeweiligen Mikrolinsen-Arrays (17a,b; 17a-c) in der zweiten Richtung (Y), λ_{L} die Laserwellenlänge, f_{E,X} die Brennweite der Mikrolinsenanordnung (11) in der ersten Richtung (X) und f_{E,Y} die Brennweite der Mikrolinsenanordnung (11) in der zweiten Richtung (Y) bezeichnen, wobei die Phasen-Einstelleinrichtungen (6.1, ..., 6.N) ausgebildet sind, für den (n x m)-ten kohärenten Laserstrahl (3.1, ..., 3.N) eine Phase δφ_{n,m} einzustellen, die gegeben ist durch: ${δφ}_{n} = - \left(2 π/{λ}_{L}\right) {f}_{E , X} {\left({p}_{n} {λ}_{L}/{p}_{x}\right)}^{2} - \left(2 π/{λ}_{L}\right) {f}_{E , Y} {\left({q}_{m} {λ}_{L}/{p}_{Y}\right)}^{2} ,$
wobei gilt: ${p}_{n} = - \frac{\left(N+1\right)}{2} + n$ ${q}_{m} = - \frac{\left(M+1\right)}{2} + m .$

22. Lasersystem (1), umfassend:
mindestens eine Laserquelle (2) zur Erzeugung einer Mehrzahl N x M von kohärenten Laserstrahlen (3.1, ..., 3.N), eine Mehrzahl von Emissionsflächen (8.1, ..., 8.N) zur Emission der Mehrzahl von kohärenten Laserstrahlen (3.1, ..., 3.N), wobei die Mehrzahl von Emissionsflächen (8.1, ..., 8.N) in einem zweidimensionalen periodischen Gitter entlang einer ersten Richtung (X) und
einer zweiten Richtung (Y), die senkrecht zu der ersten Richtung (X) ist, angeordnet sind, sowie eine Vorrichtung (16) zur Kombination der Mehrzahl N x M von kohärenten Laserstrahlen (3.1, ..., 3.N), welche mindestens (N x M) -1 Phasen-Einstelleinrichtungen (6.1, ..., 6.N) zur Einstellung einer jeweiligen Phase (δφ_{n,m}) eines der kohärenten Laserstrahlen (3.1, ..., 3.N) sowie eine Strahlkombinationseinrichtung (10) zur Kombination der kohärenten Laserstrahlen (3.1, ..., 3.N) zur Bildung mindestens eines kombinierten Laserstrahls (12, 12a,b) umfasst,
wobei die Strahlkombinationseinrichtung (10) eine Mikrolinsenanordnung (11) mit vier hintereinander angeordneten Mikrolinsen-Arrays ( 17a-d) zur Bildung des mindestens einen kombinierten Laserstrahls (12, 12a,b) aufweist, wobei die Mikrolinsen (20a, 20c) des ersten und dritten Mikrolinsenarrays (17a, 17c) entlang der ersten Richtung (X) und die Mikrolinsen (20b, 20d) des zweiten und vierten Mikrolinsenarrays (17b, 17d) entlang der zweiten Richtung (Y) angeordnet sind, **dadurch gekennzeichnet, dass** die kohärenten Laserstrahlen (3.1, ..., 3.N) und
die Mikrolinsenanordnung (11) die folgende Bedingung erfüllen: $N = {{p}_{x}}^{2} / \left({λ}_{L} {f}_{E , x}\right) ,$ $M = {{p}_{y}}^{2} / \left({λ}_{L} {f}_{E , y}\right)$
wobei N die Anzahl der kohärenten Laserstrahlen (3.1, ..., 3.N) entlang der ersten Richtung (X), M die Anzahl der kohärenten Laserstrahlen (3.1, ..., 3.N) entlang der zweiten Richtung (Y), pₓ einen identischen Rasterabstand der Mikrolinsen (20a, 20c) des ersten und dritten Mikrolinsen-Arrays (17a, 17c) in der ersten Richtung (X), p_{y} einen identischen Rasterabstand der Mikrolinsen (20b; 20d) des zweiten und vierten Mikrolinsen-Arrays (17b, 17d) in der zweiten Richtung (Y), λ_{L} die Laserwellenlänge, f_{E,X} die Brennweite der Mikrolinsenanordnung (11) in der ersten Richtung (X) und f_{E,Y} die Brennweite der Mikrolinsenanordnung (11) in der zweiten Richtung (Y) bezeichnen, wobei die Phasen-Einstelleinrichtungen (6.1, ..., 6.N) ausgebildet sind, für den (n x m)-ten kohärenten Laserstrahl (3.1, ..., 3.N) eine Phase δφ_{n,m} einzustellen, die gegeben ist durch: ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
wobei gilt: ${p}_{n} = - \frac{\left(N+1\right)}{2} + n ,$ ${q}_{m} = - \frac{\left(M+1\right)}{2} + m .$

23. Verfahren zum Kombinieren einer insbesondere einstellbaren Anzahl N von kohärenten Laserstrahlen (3.1, ..., 3.N), die von einer Mehrzahl von Emissionsflächen (8.1, ..., 8.N) emittiert werden, zu mindestens einem kombinierten Laserstrahl (12, 12a,b), umfassend:
Einstellen einer jeweiligen Phase (δφₙ) eines der kohärenten Laserstrahlen (3.1, ..., 3.N) in mindestens N-1 Phasen-Einstelleinrichtungen (6.1, ..., 6.N),
**gekennzeichnet durch**
Einkoppeln der kohärenten Laserstrahlen (3.1, ..., 3.N) in eine Mikrolinsenanordnung (11), die mindestens zwei hintereinander angeordnete Mikrolinsen-Arrays (17a,b; 17a-c) aufweist, wobei die Mikrolinsen eines jeweiligen Mikrolinsen-Arrays (17a,b; 17a-c) in einer Richtung (X) angeordnet sind, wobei die Emissionsflächen (8.1, ..., 8.N) äquidistant entlang der Richtung (X) oder äquidistant auf einem Kreisbogen (25) und in einer gemeinsamen Ebene mit den Mikrolinsen eines jeweiligen Mikrolinsen-Arrays angeordnet sind, wobei eine Brennweite f_{E}
der Mikrolinsenanordnung (11) eingestellt wird, welche die folgende Bedingung erfüllt: ${f}_{E} = {p}^{2} / \left({λ}_{L} N\right) ,$
wobei p einen identischen Rasterabstand der Mikrolinsen (20a,b; 20a-c) eines jeweiligen Mikrolinsen-Arrays (17a,b; 17a-c) und λ_{L} die Laserwellenlänge bezeichnen
Einstellen einer Phase δφₙ des n-ten kohärenten Laserstrahls (3.1, ..., 3.N), die gegeben ist **durch**: ${δφ}_{n} = - \left(2 π/{λ}_{L}\right) {f}_{E} {\left({m}_{n} {λ}_{L}/p\right)}^{2} ,$
wobei gilt: ${m}_{n} = - \frac{\left(N+1\right)}{2} + n$,
sowie Kombinieren der kohärenten Laserstrahlen (3.1, ..., 3.N) zu dem mindestens einen kombinierten Laserstrahl (12, 12a,b) in der Mikrolinsenanordnung (11).

24. Verfahren nach Anspruch 23, bei welcher das Einkoppeln mittels einer Einkoppeloptik (18) erfolgt, die eine Fokussiereinrichtung (19) aufweist, wobei das Verfahren weiter umfasst:
Einstellen eines Abstands L2 zwischen der Fokussiereinrichtung (19) und der Mikrolinsenanordnung (11), der gegeben ist durch: $L 2 = {f}_{2} - {p}^{2} / \left(N {λ}_{L}\right) ,$
wobei f₂ eine Brennweite der Fokussiereinrichtung (19) bezeichnet.

25. Verfahren nach Anspruch 23 oder 24, bei welcher das Einkoppeln mittels einer Einkoppeloptik (18) erfolgt, die eine Fokussiereinrichtung (19) und eine weitere abbildende Optik (21) aufweist, wobei das Verfahren weiter umfasst:
Einstellen einer Brennweite f₁ der weiteren abbildenden Optik (21), die gegeben ist durch: ${f}_{1} = - {{f}_{2}}^{2} / {f}_{E} ,$
wobei f₂ eine Brennweite der Fokussiereinrichtung (19) bezeichnet.

26. Verfahren zum Kombinieren einer insbesondere einstellbaren Anzahl N x M von kohärenten Laserstrahlen (3.1, ..., 3.N), die von einer Mehrzahl von Emissionsflächen (8.1, ..., 8.N) emittiert werden, wobei die Mehrzahl von Emissionsflächen (8.1, ..., 8.N) in einem zweidimensionalen periodischen Gitter entlang einer ersten Richtung (X) und entlang einer zweiten Richtung (Y), die senkrecht zu der ersten Richtung (Y) ist, angeordnet sind, zu mindestens einem kombinierten Laserstrahl (12, 12a,b), umfassend:
Einstellen einer jeweiligen Phase (δφ_{n,m}) eines der kohärenten Laserstrahlen (3.1, ..., 3.N) in mindestens (N x M)-1 Phasen-Einstelleinrichtungen (6.1, ..., 6.N), **gekennzeichnet durch**
Einkoppeln der kohärenten Laserstrahlen (3.1, ..., 3.N) in eine Mikrolinsenanordnung (11), die mindestens zwei hintereinander angeordnete Mikrolinsen-Arrays (17a,b; 17a-c) aufweist, wobei die Mikrolinsen (20a, 20b) eines jeweiligen Mikrolinsen-Arrays (17a,b; 17a-c) jeweils in einem zweidimensionalen periodischen Gitter angeordnet sind, wobei eine Brennweite f_{E,X} der Mikrolinsenanordnung (11) in der ersten Richtung (X) und eine Brennweite f_{E,Y} der Mikrolinsenanordnung (11) in der zweiten Richtung (Y) eingestellt werden, welche die folgenden Bedingungen erfüllen: ${f}_{E , X} = {{p}_{X}}^{2} / \left({λ}_{L} N\right) ,$ ${f}_{E , Y} = {{p}_{Y}}^{2} / \left({λ}_{L} M\right) ,$
wobei p_{X} einen identischen Rasterabstand der Mikrolinsen (20a,b; 20a-c) eines jeweiligen Mikrolinsen-Arrays (17a,b; 17a-c) in der ersten Richtung (X), p_{Y} einen identischen Rasterabstand der Mikrolinsen (20a,b; 20a-c) eines jeweiligen Mikrolinsen-Arrays (17a,b; 17a-c) in der zweiten Richtung (Y), N die Anzahl der kohärenten Laserstrahlen (3.1, ..., 3.N) entlang der ersten Richtung (X), M die Anzahl der kohärenten Laserstrahlen (3.1, ..., 3.N) entlang der zweiten Richtung (Y) und λ_{L} die Laserwellenlänge bezeichnen,
Einstellen einer Phase δφ_{n,m} des (n x m)-ten kohärenten Laserstrahls (3.1, ..., 3.N), die gegeben ist **durch**: ${δφ}_{n , m} = - \left(2 π/{λ}_{L}\right) {f}_{E , X} {\left({p}_{n} {λ}_{L}/{p}_{Y}\right)}^{2} - \left(2 π/{λ}_{L}\right) {f}_{E , Y} {\left({q}_{m} {λ}_{L}/{p}_{Y}\right)}^{2} ,$
wobei gilt: ${p}_{n} = - \frac{\left(N+1\right)}{2} + n ,$ ${q}_{m} = - \frac{\left(M+1\right)}{2} + m ,$
sowie Kombinieren der kohärenten Laserstrahlen (3.1, ..., 3.N) zu dem mindestens einen kombinierten Laserstrahl (12, 12a,b) in der Mikrolinsenanordnung (11).

27. Verfahren zum Kombinieren einer insbesondere einstellbaren Anzahl N x M von kohärenten Laserstrahlen (3.1, ..., 3.N), die von einer Mehrzahl von Emissionsflächen (8.1, ..., 8.N) emittiert werden, wobei die Mehrzahl von Emissionsflächen (8.1, ..., 8.N) in einem zweidimensionalen periodischen Gitter entlang einer ersten Richtung (X) und entlang einer zweiten Richtung (Y), die senkrecht zu der ersten Richtung (Y) ist, angeordnet sind, zu mindestens einem kombinierten Laserstrahl (12, 12a,b), umfassend:
Einstellen einer jeweiligen Phase (δφ_{n,m}) eines der kohärenten Laserstrahlen (3.1, ..., 3.N) in mindestens (N x M)-1 Phasen-Einstelleinrichtungen (6.1, ..., 6.N), **gekennzeichnet durch**
Einkoppeln der kohärenten Laserstrahlen (3.1, ..., 3.N) in eine Mikrolinsenanordnung (11), die vier hintereinander angeordnete Mikrolinsen-Arrays (17a-d) aufweist, wobei die Mikrolinsen (20a, 20c) des ersten und dritten Mikrolinsenarrays (17a, 17c) entlang der ersten Richtung (X) und die Mikrolinsen (20b, 20d) des zweiten und vierten Mikrolinsenarrays (17b, 17d) entlang der zweiten Richtung (Y) angeordnet sind, wobei eine Brennweite f_{E,X} der Mikrolinsenanordnung (11) in der ersten Richtung (X) und eine Brennweite f_{E,Y} der Mikrolinsenanordnung (11) in der zweiten Richtung (Y) eingestellt werden,
welche die folgenden Bedingungen erfüllen: ${f}_{E , X} = {{p}_{X}}^{2} / \left({λ}_{L} N\right) ,$ ${f}_{E , Y} = {{p}_{Y}}^{2} / \left({λ}_{L} M\right) ,$
wobei p_{X} einen identischen Rasterabstand der Mikrolinsen (20a, 20c) des ersten und dritten Mikrolinsen-Arrays (17a, 17c) in der ersten Richtung (X), p_{Y} einen identischen Rasterabstand der Mikrolinsen (20b; 20d) des zweiten und vierten Mikrolinsen-Arrays (17b, 17d) in der zweiten Richtung (Y), N die Anzahl der kohärenten Laserstrahlen (3.1, ..., 3.N) entlang der ersten Richtung (X), M die Anzahl der kohärenten Laserstrahlen (3.1, ..., 3.N) entlang der zweiten Richtung (Y) und λ_{L} die Laserwellenlänge bezeichnen,
Einstellen einer Phase δφ_{n,m} des (n x m)-ten kohärenten Laserstrahls (3.1, ..., 3.N), die gegeben ist **durch**: ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
wobei gilt: ${p}_{n} = - \frac{\left(N+1\right)}{2} + n ,$ ${q}_{m} = - \frac{\left(M+1\right)}{2} + m ,$
sowie Kombinieren der kohärenten Laserstrahlen (3.1, ..., 3.N) zu dem mindestens einen kombinierten Laserstrahl (12, 12a,b) in der Mikrolinsenanordnung (11).

## Claims

1. A laser system (1), comprising:
at least one laser source (2) for generating a plurality N of coherent laser beams (3.1, ..., 3.N), a plurality of emission surfaces (8.1, ..., 8.N) for emitting the plurality of coherent laser beams (3.1, ..., 3.N), wherein the plurality of emission surfaces (8.1, ..., 8.N), as well as a device (16) for combining the plurality N of coherent laser beams (3.1, ..., 3.N), which comprises at least N-1 phase adjustment devices (6.1, ..., 6.N) for adjusting a respective phase (δφₙ) of one of the coherent laser beams (3.1, ..., 3.N), as well as a beam combination device (10) for combining the coherent laser beams (3.1, ..., 3.N) to form at least one combined laser beam (12; 12a,b),
wherein the beam combination device (10) has a micro-lens arrangement (11) with at least two micro-lens arrays (17a,b; 17a-c) arranged one behind the other to form the at least one combined laser beam (12, 12a,b), wherein the micro-lenses (20a,b; 20a-c) of a respective micro-lens array (17a,b; 17a-c) are arranged in a direction (X), wherein the plurality of emission surfaces (8.1, ..., 8.N) are arranged equidistantly along the direction (X) or equidistantly on a circular arc (25) and in a common plane with the micro-lenses of a respective micro-lens array,
**characterized in that** the coherent laser beams (3.1, ..., 3.N) and the micro-lens arrangement (11) satisfy the following condition: $N = {p}^{2} / \left({λ}_{L} {f}_{E}\right) ,$
wherein N is the number of coherent laser beams (3.1, ..., 3.N), p is an identical grid spacing of the micro-lenses (20a,b; 20a-c) of a respective micro-lens array (17a,b; 17a-c), λ_{L} denotes the laser wavelength, and f_{E} denotes the focal length of the micro-lens arrangement (11), wherein the phase adjustment devices (6.1, ..., 6.N) are designed to adjust a phase δφn for the nth coherent laser beam (3.1, ..., 3.N), which is given by: $δφn = - \left(2 π/{λ}_{L}\right) {f}_{E} {\left({m}_{n} {λ}_{L}/p\right)}^{2} ,$
wherein the following applies: ${m}_{n} = - \frac{\left(N+1\right)}{2} + n$.

2. The laser system (1) according to claim 1, in which the micro-lens arrangement (11) has at least three micro-lens arrays (17a-c) and is designed to adjust its focal length (f_{E}), wherein, preferably, the micro-lens arrangement (11) is designed to adjust its focal length (f_{E}) by varying a distance (d₁, d₂) between at least a first micro-lens array (17a, 17b) and a second micro-lens array (17b, 17c).

3. The laser system (1) according to claim 1 or 2, further comprising: a movement device (35) for generating a preferably adjustable lateral offset (Δ) between at least a first micro-lens array (17a) and at least a second micro-lens array (17b) of the micro-lens arrangement (11).

4. The laser system (1) according to any one of the preceding claims, in which a first and a second micro-lens array (17a,b) have a lateral offset Δ for forming two combined laser beams (12a,b), for which offset the following applies: $Δ = \pm p / \left(2 N\right) .$

5. The laser system (1) according to any one of claims 1 to 3, in which a first and a second micro-lens array (17a,b) of the at least two micro-lens arrays have a lateral offset Δ for combining an even number N of coherent laser beams (3.1, ..., 3.N) to form a combined laser beam (12), for which offset the following applies: $Δ = \pm p / \left(2 N+1\right) ,$ wherein, for a preferably adjustable distance d between the first micro-lens array (17a) and the second micro-lens array (17b), the following applies: $d = {p}^{2} / \left(N {λ}_{L}\right) .$

6. The laser system (1) according to any one of claims 1 to 3, in which the first and second micro-lens arrays (17a,b) have a lateral offset Δ for forming a combined laser beam (12) diffracted into a diffraction order B other than zero, for which offset the following applies: $Δ = p / N B .$

7. The laser system (1) according to any one of the preceding claims, further comprising: a coupling optical system (18) for coupling the coherent laser beams (3.1, ..., 3.N) into the micro-lens arrangement (11), wherein the coupling optical system (18) is preferably designed to couple adjacent coherent laser beams (3.1, 3.2; 3.2, 3.3) into the micro-lens arrangement (11) with a predetermined angle difference δθ, for which the following applies: $δθ = {λ}_{L} / p .$

8. The laser system (1) according to claim 7, in which the coupling optical system (18) has at least one focusing device, in particular at least one focusing lens (19), for focusing the plurality of coherent laser beams (3.1, ..., 3.N) onto the micro-lens arrangement (11), wherein, preferably, the coupling optical system (18) comprises, for correcting a phase front (δφₙ(x)) of the plurality of coherent laser beams (3.1, ..., 3.N), at least one further imaging optical system, in particular at least one further lens (21, 21 a,b).

9. The laser system (1) according to any one of the preceding claims, wherein the coherent laser beams (3.1, ..., 3.N) have a Gaussian beam profile, a doughnut-shaped beam profile, or a top-hat beam profile.

10. The laser system according to any one of the preceding claims, further comprising: a control device (15) designed to adjust the focal length (f_{E}) of the micro-lens arrangement (11) depending on the number N of coherent laser beams (3.1, ... 3.N).

11. The laser system according to claim 10 and claim 8, in which a distance (L2) between the focusing device (19) and the micro-lens arrangement (11) is adjustable, and in which the control device (15) is designed to adjust the distance (L2) depending on the number N of coherent laser beams (3.1, ..., 3.N).

12. The laser system according to claim 8, in which the focusing device (19) is arranged at a distance (L2) equal to its focal length f₂ from a first micro-lens array (17a) of the micro-lens arrangement (11), and the focal length f₂ of the focusing device (19), a focal length f₁ of a further imaging optical system (21), and the focal length f_{E} of the micro-lens arrangement (11) satisfy the following condition: ${f}_{1} = - {{f}_{2}}^{2} / {f}_{E} .$

13. The laser system according to claim 12 and claim 10, in which the focal length (f₁) of the further imaging optical system (21) is adjustable, and the control device (15) is designed to adjust the focal length (f₁) of the further imaging optical system (21) depending on the number N of coherent laser beams (3.1, ..., 3.N).

14. The laser system according to claim 8, in which adjacent emission surfaces (8.1, ..., 8.N) are arranged equidistantly along the direction (X) and are spaced apart from one another by a distance δx, which is given by $δx = {λ}_{L} {f}_{2} / p .$

15. The laser system according to any one of claims 1 to 13, in which adjacent emission surfaces (8.1, ..., 8.N) are arranged and aligned equidistantly on the circular arc (25), and adjacent coherent laser beams (3.1, 3.2; 3.2, 3.3) are coupled into the micro-lens arrangement (11) with a predetermined angle difference δθ, for which the following applies: $δθ = {λ}_{L} / p .$

16. The laser system according to claim 7, in which the coupling optical system has or forms a beam-forming optical system (18) for forming a respective coherent laser beam (3.1, ..., 3.N) with a predetermined, in particular adjustable, divergence angle (α_{D}) upon coupling into the micro-lens arrangement (11).

17. The laser system according to claim 16, having an even number N of emission surfaces (8.1, ..., 8.N), wherein the beam-forming optical system (18) has a focal length f that satisfies the following condition: $f = {p}^{2} / {λ}_{L} .$

18. The laser system according to any one of the preceding claims, having an even number N of emission surfaces (8.1, ..., 8.N), wherein the micro-lens arrangement (11) has a phase-shifting device (25) designed for generating a constant phase shift of π between beam bundles (26) of the coherent laser beams (3.1, ..., 3.N) that pass through adjacent micro-lenses (20a,b; 20a-c) of a respective micro-lens array (17a,b; 17a-c).

19. The laser system according to any one of the preceding claims, further comprising: a first wavelength-dispersive element, in particular a first diffraction grating (30), arranged in front of the micro-lens arrangement (11), for the spectral separation of the coherent laser beams (3.1, ..., 3.N) into multiple beam bundles (26a-c), which pass through the micro-lens arrangement (11) in a separated manner, as well as a second wavelength-dispersive optical element, in particular a second diffraction grating (33), arranged behind the micro-lens arrangement (11), for the spectral combination of the beam bundles (26a-c) for forming the combined laser beam (12) with a wavelength (λ_{L}).

20. The laser system according to claim 19 and claim 7, in which the coupling optical system (18) has a collimation lens (31) that is designed as an aspheric lens.

21. A laser system (1), comprising:
at least one laser source (2) for generating a plurality N × M of coherent laser beams (3.1, ..., 3.N), a plurality of emission surfaces (8.1, ..., 8.N) for emitting the plurality of coherent laser beams (3.1, ..., 3.N), wherein the plurality of emission surfaces (8.1, ..., 8.N) are arranged in a two-dimensional periodic grating along a first direction (X) and a second direction (Y) that is perpendicular to the first direction (X), as well as a device (16) for combining the plurality N × M of coherent laser beams (3.1, ..., 3.N), which comprises at least (N × M)-1 phase adjustment devices (6.1, ..., 6.N) for adjusting a respective phase (δφ_{n,m}) of one of the coherent laser beams (3.1, ..., 3.N), as well as a beam combination device (10) for combining the coherent laser beams (3.1, ..., 3.N) to form at least one combined laser beam (12; 12a,b),
wherein the beam combination device (10) has a micro-lens arrangement (11) with at least two micro-lens arrays (17a, b; 17a-c) arranged one behind the other to form the at least one combined laser beam (12, 12a,b), wherein the micro-lenses (20a, 20b) of a respective micro-lens array (17a,b; 17a-c) are each arranged in a two-dimensional periodic grating, **characterized in that** the coherent laser beams (3.1, ..., 3.N) and the micro-lens arrangement (11) satisfy the following condition: $N = {{p}_{x}}^{2} / \left({λ}_{L} {f}_{E , X}\right) ,$ $M = {{p}_{y}}^{2} / \left({λ}_{L} {f}_{E , Y}\right) ,$
wherein N is the number of coherent laser beams (3.1, ..., 3.N) along the first direction (X), M is the number of coherent laser beams (3.1, ..., 3.N) along the second direction (Y), pₓ is an identical grid spacing of the micro-lenses (20a,b; 20a-c) of a respective micro-lens array (17a,b; 17a-c) in the first direction (X), p_{y} is an identical grid spacing of the micro-lenses (20a,b; 20a-c) of a respective micro-lens array (17a,b; 17a-c) in the second direction (Y), where λ_{L} denotes the laser wavelength, f_{E,X} denotes the focal length of the micro-lens arrangement (11) in the first direction (X), and f_{E,Y} denotes the focal length of the micro-lens arrangement (11) in the second direction (Y), wherein the phase adjustment devices (6.1, ..., 6.N) are designed to adjust a phase δφ_{n,m} for the (n × m)th coherent laser beam (3.1, ..., 3.N), which is given by: ${δφ}_{n} = - \left(2 π/{λ}_{L}\right) {f}_{E , X} {\left({p}_{n} {λ}_{L}/{p}_{x}\right)}^{2} - \left(2 π/{λ}_{L}\right) {f}_{E , Y} {\left({q}_{m} {λ}_{L}/{p}_{Y}\right)}^{2} ,$
wherein the following applies: ${p}_{n} = - \frac{\left(N+1\right)}{2} + n$ ${q}_{m} = - \frac{\left(M+1\right)}{2} + m .$

22. A laser system (1), comprising:
at least one laser source (2) for generating a plurality N × M of coherent laser beams (3.1, ..., 3.N), a plurality of emission surfaces (8.1, ..., 8.N) for emitting the plurality of coherent laser beams (3.1, ..., 3.N), wherein the plurality of emission surfaces (8.1, ..., 8.N) are arranged in a two-dimensional periodic grating along a first direction (X) and a second direction (Y) that is perpendicular to the first direction (X), as well as a device (16) for combining the plurality N × M of coherent laser beams (3.1, ..., 3.N), which comprises at least (N × M)-1 phase adjustment devices (6.1, ..., 6.N) for adjusting a respective phase (δφ_{n,m}) of one of the coherent laser beams (3.1, ..., 3.N), as well as a beam combination device (10) for combining the coherent laser beams (3.1, ..., 3.N) to form at least one combined laser beam (12; 12a,b),
wherein the beam combination device (10) has a micro-lens arrangement (11) with four micro-lens arrays (17a-d) arranged one behind the other to form the at least one combined laser beam (12, 12a, b), wherein the micro-lenses (20a, 20c) of the first and third micro-lens arrays (17a, 17c) are arranged along the first direction (X) and the micro-lenses (20b, 20d) of the second and fourth micro-lens arrays (17b, 17d) are arranged along the second direction (Y), **characterized in that** the coherent laser beams (3.1, ..., 3.N) and the micro-lens arrangement (11) satisfy the following condition: $N = {{p}_{x}}^{2} / \left({λ}_{L} {f}_{E , x}\right) ,$ $M = {{p}_{y}}^{2} / \left({λ}_{L} {f}_{E , y}\right)$
wherein N is the number of coherent laser beams (3.1, ..., 3.N) along the first direction (X), M is the number of coherent laser beams (3.1, ..., 3.N) along the second direction (Y), pₓ is an identical grid spacing of the micro-lenses (20a, 20c) of the first and third micro-lens arrays (17a, 17c) in the first direction (X), p_{y} is an identical grid spacing of the micro-lenses (20b; 20d) of the second and fourth micro-lens arrays (17b, 17d) in the second direction (Y), where λ_{L} denotes the laser wavelength, f_{E,X} denotes the focal length of the micro-lens arrangement (11) in the first direction (X), and f_{E,Y} denotes the focal length of the micro-lens arrangement (11) in the second direction (Y), wherein the phase adjustment devices (6.1, ..., 6.N) are designed to adjust a phase δφ_{n,m} for the (n × m)th coherent laser beam (3.1, ..., 3.N), which is given by: ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
wherein the following applies: ${p}_{n} = - \frac{\left(N+1\right)}{2} + n ,$ ${q}_{m} = - \frac{\left(M+1\right)}{2} + m .$

23. A method for combining an in particular adjustable number N of coherent laser beams (3.1, ..., 3.N) emitted from a plurality of emission surfaces (8.1, ..., 8.N) to form at least one combined laser beam (12, 12a,b), comprising:
adjusting a respective phase (δφₙ) of one of the coherent laser beams (3.1, ..., 3.N) in at least N-1 phase adjustment devices (6.1, ..., 6.N), **characterized by** coupling the coherent laser beams (3.1, ..., 3.N) into a
micro-lens arrangement (11), which has at least two micro-lens arrays (17a,b; 17a-c) arranged one behind the other, wherein the micro-lenses of a respective micro-lens array (17a,b; 17a-c) are arranged in a direction (X), wherein the emission surfaces (8.1, ..., 8.N) are arranged equidistantly along the direction (X) or equidistantly on a circular arc (25) and in a common plane with the micro-lenses of a respective micro-lens array, wherein a focal length f_{E} of the micro-lens arrangement (11) is adjusted, which satisfies the following condition: ${f}_{E} = {p}^{2} / \left({λ}_{L} N\right) ,$
wherein p represents an identical grid spacing of the micro-lenses (20a,b; 20a-c) of a
respective micro-lens array (17a,b; 17a-c) and λ_{L} denotes the laser wavelength adjusting a phase δφₙ of the nth coherent laser beam (3.1, ..., 3.N), which is given by: ${δφ}_{n} = - \left(2 π/{λ}_{L}\right) {f}_{E} {\left({m}_{n} {λ}_{L}/p\right)}^{2} ,$
wherein the following applies: ${m}_{n} = - \frac{\left(N+1\right)}{2} + n$,
and combining the coherent laser beams (3.1, ..., 3.N) to form the at least one combined laser beam (12, 12a,b) in the micro-lens arrangement (11).

24. The method according to claim 23, in which the coupling is performed by means of a
coupling optical system (18) having a focusing device (19), wherein the method further comprises:
adjusting a distance L2 between the focusing device (19) and the micro-lens arrangement (11), which is given by: $L 2 = {f}_{2} - {p}^{2} / \left(N {λ}_{L}\right) ,$
wherein f₂ denotes a focal length of the focusing device (19).

25. The method according to claim 23 or 24, in which the coupling is performed by means of a coupling optical system (18) having a focusing device (19) and a further imaging optical system (21), wherein the method further comprises:
adjusting a focal length f1 of the further imaging optical system (21), which is given by: ${f}_{1} = - {{f}_{2}}^{2} / {f}_{E} ,$
wherein f₂ denotes a focal length of the focusing device (19).

26. A method for combining an in particular adjustable number N x M of coherent laser beams (3.1, ..., 3.N) emitted from a plurality of emission surfaces (8.1, ..., 8.N), wherein the plurality of emission surfaces (8.1, ..., 8. N) are arranged in a two-dimensional periodic grating along a first direction (X) and along a second direction (Y) that is perpendicular to the first direction (Y), to form at least one combined laser beam (12, 12a,b), comprising:
adjusting a respective phase (δφ_{n,m}) of one of the coherent laser beams (3.1, ..., 3.N) in at least (N x M)-1 phase adjustment devices (6.1, ..., 6.N), **characterized by** coupling the coherent laser beams (3.1, ..., 3. N) into a micro-lens arrangement (11), which has at least two micro-lens arrays (17a,b; 17a-c) arranged one behind the other, wherein the micro-lenses (20a, 20b) of a respective micro-lens array (17a,b; 17a-c) are each arranged in a two-dimensional periodic grating, wherein a focal length f_{E,X} of the micro-lens arrangement (11) in the first direction (X) and a focal length f_{E,Y} of the micro-lens arrangement (11) in the second direction (Y) are adjusted, which satisfy the following conditions: ${f}_{E , X} = {{p}_{X}}^{2} / \left({λ}_{L} N\right) ,$ ${f}_{E , Y} = {{p}_{Y}}^{2} / \left({λ}_{L} M\right) ,$
wherein p_{X} is an identical grid spacing of the micro-lenses (20a,b; 20a-c) of a respective micro-lens array (17a,b; 17a-c) in the first direction (X), p_{Y} is an identical grid spacing of the micro-lenses (20a,b; 20a-c) of a respective micro-lens array (17a,b; 17a-c) in the second direction (Y), N denotes the number of coherent laser beams (3.1, ..., 3.N) along the first direction (X), M denotes the number of coherent laser beams (3.1, ..., 3.N) along the second direction (Y), and
λ_{L} denotes the laser wavelength,
adjusting a phase δφ_{n,m} of the (n × m)th coherent laser beam (3.1, ..., 3.N), which is given by: ${δφ}_{n , m} = - \left(2 π/{λ}_{L}\right) {f}_{E , X} {\left({p}_{n} {λ}_{L}/{p}_{Y}\right)}^{2} - \left(2 π/{λ}_{L}\right) {f}_{E , Y} {\left({q}_{m} {λ}_{L}/{p}_{Y}\right)}^{2} ,$
wherein the following applies: ${p}_{n} = - \frac{\left(N+1\right)}{2} + n ,$ ${q}_{m} = - \frac{\left(M+1\right)}{2} + m .$
and combining the coherent laser beams (3.1, ..., 3.N) to form the at least one combined laser beam (12, 12a,b) in the micro-lens arrangement (11).

27. A method for combining an in particular adjustable number N × M of coherent laser beams (3.1, ..., 3.N) emitted from a plurality of emission surfaces (8.1, ..., 8.N), wherein the plurality of emission surfaces (8.1, ..., 8. N) are arranged in a two-dimensional periodic grating along a first direction (X) and along a second direction (Y) that is perpendicular to the first direction (Y), to form at least one combined laser beam (12, 12a,b), comprising:
adjusting a respective phase (δφ_{n,m}) of one of the coherent laser beams (3.1, ..., 3.N) in at least (N x M)-1 phase adjustment devices (6.1, ..., 6.N), **characterized by** coupling the coherent laser beams (3.1, ..., 3.N) into a micro-lens arrangement (11) having four micro-lens arrays (17a-d) arranged one behind the other, wherein the micro-lenses (20a, 20c) of the first and third micro-lens arrays (17a, 17c) are arranged along the first direction (X) and the micro-lenses (20b, 20d) of the second and fourth micro-lens arrays (17b, 17d) are arranged along the second direction (Y), wherein a focal length f_{E,X} of the
micro-lens arrangement (11) in the first direction (X) and a focal length f_{E,Y} of the micro-lens arrangement (11) in the second direction (Y) are adjusted, which satisfy the following conditions: ${f}_{E , X} = {{p}_{X}}^{2} / \left({λ}_{L} N\right) ,$ ${f}_{E , Y} = {{p}_{Y}}^{2} / \left({λ}_{L} M\right) ,$
wherein p_{X} is an identical grid spacing of the micro-lenses (20a, 20c) of the first and third micro-lens arrays (17a, 17c) in the first direction (X), p_{Y} is an identical grid spacing of the micro-lenses (20b; 20d) of the second and fourth micro-lens arrays (17b, 17d) in the second direction (Y), N denotes the number of coherent laser beams (3.1, ..., 3.N) along the first direction (X), M denotes the number of coherent laser beams (3.1, ..., 3.N) along the second direction (Y), and λ_{L} denotes the laser wavelength,
adjusting a phase δφ_{n,m} of the (n × m)th coherent laser beam (3.1, ..., 3.N), which is given by: ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
wherein the following applies: ${p}_{n} = - \frac{\left(N+1\right)}{2} + n ,$ ${q}_{m} = - \frac{\left(M+1\right)}{2} + m ,$
and combining the coherent laser beams (3.1, ..., 3.N) to form the at least one combined laser beam (12, 12a,b) in the micro-lens arrangement (11).

## Revendications

1. Système laser (1), comprenant :
au moins une source laser (2) pour générer une pluralité N de faisceaux laser (3.1, ..., 3.N) cohérents, une pluralité de surfaces d'émission (8.1, ..., 8.N) pour émettre la pluralité de faisceaux laser (3.1, ..., 3.N) cohérents, **dans lequel** la pluralité de surfaces d'émission (8.1, ..., 8.N), ainsi qu'un dispositif (16) pour combiner la pluralité N de faisceaux laser (3.1, ..., 3.N) cohérents, lequel comprend au moins N-1 équipements de réglage de phase (6.1, ..., 6.N) pour régler la phase (δφₙ) respective de l'un des faisceaux laser (3.1, ..., 3.N) cohérents, ainsi qu'un équipement de combinaison de faisceaux (10) pour combiner les faisceaux laser (3.1, ..., 3.N) cohérents pour former au moins un faisceau laser (12 ; 12a, b) combiné,
dans lequel le dispositif de combinaison de faisceaux (10) présente un agencement de microlentilles (11) comportant au moins deux réseaux de microlentilles (17a, b ; 17a-c) agencés l'un derrière l'autre pour former l'au moins un faisceau laser (12, 12a, b) combiné, dans lequel les microlentilles (20a, b ; 20a-c) du réseau de microlentilles (17a, b ; 17a-c) respectif sont agencées dans une direction (X), dans lequel la pluralité de surfaces d'émission (8.1, ..., 8.N) sont agencées de manière équidistante le long de la direction (X) ou de manière équidistante sur un arc de cercle (25) et dans un plan commun avec les microlentilles du réseau de microlentilles respectif, **caractérisé en ce que** les faisceaux laser (3.1, ..., 3.N) cohérents et l'agencement de microlentilles (11) satisfont à la condition suivante : $N = {p}^{2} / \left({λ}_{L}{f}_{E}\right) ,$
dans lequel N est le nombre de faisceaux laser (3.1, ..., 3.N) cohérents, p est un écart de grille identique des microlentilles (20a, b ; 20a-c) d'un réseau de microlentilles (17a, b ; 17a-c) respectif, λ_{L} est la longueur d'onde de laser et f_{E} est la longueur focale de l'agencement de microlentilles (11), dans lequel les équipements de réglage de phase (6.1, ..., 6.N) sont conçus pour régler une phase δφₙ pour le N-ième faisceau laser (3.1, ..., 3.N) cohérent, laquelle est donnée par : ${δφ}_{n} = - \left(2 π/{λ}_{L}\right) {f}_{E} {\left({m}_{n} {λ}_{L}/p\right)}^{2} ,$
dans lequel s'applique ce qui suit : ${m}_{n} = - \frac{\left(N+1\right)}{2} + n$.

2. Système laser (1) selon la revendication 1, selon lequel l'agencement de microlentilles (11) présente au moins trois réseaux de microlentilles (17a-c) et est conçu pour régler sa longueur focale (f_{E}), dans lequel, de préférence l'agencement de microlentilles (11) est conçu pour régler sa longueur focale (f_{E}) en modifiant un écart (d₁, d₂) entre au moins un premier réseau de microlentilles (17a, 17b) et un deuxième réseau de microlentilles (17b, 17c).

3. Système laser (1) selon la revendication 1 ou 2, comprenant en outre : un équipement de mouvement (35) pour générer un décalage latéral (Δ), de préférence réglable, entre au moins le premier réseau de microlentilles (17a) et au moins le deuxième réseau de microlentilles (17b) de l'agencement de microlentilles (11).

4. Système laser (1) selon l'une quelconque des revendications précédentes, selon lequel le premier et le deuxième réseau de microlentilles (17a, b), pour former deux faisceaux laser (12a, b) combinés, présentent un décalage latéral Δ, pour lequel s'applique ce qui suit :$Δ = \pm p / \left(2 N\right) .$

5. Système laser (1) selon l'une quelconque des revendications 1 à 3, dans lequel le premier et le deuxième réseau de microlentilles (17a, b) des au moins deux réseaux de microlentilles, pour combiner un nombre pair N de faisceaux laser (3.1, ..., 3.N) cohérents en un faisceau laser (12) combiné, présentent un décalage latéral Δ, pour lequel s'applique ce qui suit :$Δ = \pm p / \left(2 N+1\right) ,$ dans lequel, pour un écart d, de préférence réglable, entre le premier réseau de microlentilles (17a) et le deuxième réseau de microlentilles (17b) s'applique ce qui suit : d = p² / (N λ_{L}).

6. Système laser (1) selon l'une quelconque des revendications 1 à 3, dans lequel le premier et le deuxième réseau de microlentilles (17a, b) présentent un décalage latéral Δ pour former un faisceau laser (12) combiné diffracté en un ordre de diffraction non nul B, pour lequel s'applique ce qui suit : $Δ = p / N B .$

7. Système laser (1) selon l'une quelconque des revendications précédentes, comprenant en outre : une optique de couplage (18) pour coupler les faisceaux laser (3.1, ..., 3.N) cohérents dans l'agencement de microlentilles (11), dans lequel l'optique de couplage (18) est, de préférence conçue pour coupler des faisceaux laser (3.1, 3.2 ; 3.2, 3.3) cohérents adjacents à une différence angulaire δθ prédéterminée dans l'agencement de microlentilles (11), pour laquelle s'applique ce qui suit : $δθ = {λ}_{L} / p .$

8. Système laser (1) selon la revendication 7, dans lequel l'optique de couplage (18) présente au moins un équipement de focalisation, en particulier au moins une lentille de focalisation (19), pour focaliser la pluralité de faisceaux laser (3.1, ..., 3.N) cohérents sur l'agencement de microlentilles (11), dans lequel, de préférence l'optique de couplage (18) comprend, pour corriger un front de phase (δφₙ(x)) de la pluralité de faisceaux laser (3.1, ..., 3.N) cohérents, au moins une optique d'imagerie supplémentaire, en particulier au moins une autre lentille (21, 21a, b).

9. Système laser (1) selon l'une quelconque des revendications précédentes, dans lequel les faisceaux laser (3.1, ..., 3.N) cohérents présentent un profil de faisceau gaussien, un profil de faisceau en forme de beignet ou un profil de faisceau en forme de chapeau haut-de-forme.

10. Système laser selon l'une quelconque des revendications précédentes, comprenant en outre : un équipement de commande (15) conçu pour régler la longueur focale (f_{E}) de l'agencement de microlentilles (11) en fonction du nombre N de faisceaux laser (3.1, ... 3.N) cohérents.

11. Système laser selon la revendication 10 et la revendication 8, selon lequel un écart (L2) entre l'équipement de focalisation (19) et l'agencement de microlentilles (11) est réglable, et selon lequel l'équipement de commande (15) est conçu pour régler l'écart (L2) en fonction du nombre N de faisceaux laser (3.1, ..., 3.N) cohérents.

12. Système laser selon la revendication 8, selon lequel l'équipement de focalisation (19) est agencé à un écart (L2) de sa longueur focale f₂ par rapport à un premier réseau de microlentilles (17a) de l'agencement de microlentilles (11) et la longueur focale f₂ de l'équipement de focalisation (19), une longueur focale f₁ d'une optique d'imagerie (21) supplémentaire et la longueur focale f_{E} de l'agencement de microlentilles (11) satisfont à la condition suivante : ${f}_{1} = - {{f}_{2}}^{2} / {f}_{E} .$

13. Système laser selon la revendication 12 et la revendication 10, selon lequel la longueur focale (f₁) de l'optique d'imagerie (21) supplémentaire est réglable et l'équipement de commande (15) est conçu pour régler la longueur focale (f₁) de l'optique d'imagerie (21) supplémentaire en fonction du nombre N des faisceaux laser (3.1, ..., 3.N) cohérents.

14. Système laser selon la revendication 8, selon lequel les surfaces d'émission (8.1, ..., 8.N) adjacentes sont agencées de manière équidistante le long de la direction (X) et présentent un écart δx les unes par rapport aux autres, lequel est donné par $δx = {λ}_{L} {f}_{2} / p .$

15. Système laser selon l'une quelconque des revendications 1 à 13, selon lequel les surfaces d'émission (8.1, ..., 8.N) adjacentes sont agencées et alignées de manière équidistante sur l'arc de cercle (25) pour coupler des faisceaux laser (3.1, 3.2 ; 3.2, 3.3) cohérents adjacents à une différence angulaire δθ prédéterminée dans l'agencement de microlentilles (11), pour laquelle s'applique ce qui suit : $δθ = {λ}_{L} / p .$

16. Système laser selon la revendication 7, selon lequel l'optique de couplage présente ou forme une optique de mise en forme de faisceau (18) pour mettre en forme un faisceau laser (3.1, ..., 3.N) cohérent respectif à un angle de divergence (α_{D}) prédéterminé, en particulier réglable, lors du couplage dans l'agencement de microlentilles (11).

17. Système laser selon la revendication 16, lequel présente un nombre pair N de surfaces d'émission (8.1, ..., 8.N), dans lequel l'optique de mise en forme de faisceau (18) présente une longueur focale f, laquelle satisfait la condition suivante : $f = {p}^{2} / {λ}_{L} .$

18. Système laser selon l'une quelconque des revendications précédentes, lequel présente un nombre pair N de surfaces d'émission (8.1, ..., 8.N), dans lequel l'agencement de microlentilles (11) présente un équipement de déphasage (25), lequel est conçu pour générer un décalage constant de phase de π entre des groupes de faisceaux (26) des faisceaux laser (3.1, ..., 3.N) cohérents, lesquels traversent les microlentilles (20a, b ; 20a-c) adjacentes d'un réseau de microlentilles (17a, b ; 17a-c) respectif.

19. Système laser selon l'une quelconque des revendications précédentes, comprenant en outre :
un premier élément dispersif en longueur d'onde, en particulier un premier réseau de diffraction (30), agencé en amont de l'agencement de microlentilles (11), pour décomposer de manière spectrale les faisceaux laser (3.1, ..., 3.N) cohérents en plusieurs groupes de faisceaux (26a-c), lesquels traversent séparément l'agencement de microlentilles (11), ainsi que
un second élément optique dispersif en longueur d'onde, en particulier un second réseau de diffraction (33), agencé en aval de l'agencement de microlentilles (11) pour combiner de manière spectrale les groupes de faisceaux (26a-c) pour former le faisceau laser (12) combiné comportant une longueur d'onde (λ_{L}).

20. Système laser selon la revendication 19 et la revendication 7, selon lequel l'optique de couplage (18) présente une lentille de collimation (31), laquelle est conçue sous la forme d'une lentille asphérique.

21. Système laser (1), comprenant :
au moins une source laser (2) pour générer une pluralité N x M de faisceaux laser (3.1, ..., 3.N) cohérents, une pluralité de surfaces d'émission (8.1, ..., 8.N) pour émettre la pluralité de faisceaux laser (3.1, ..., 3.N) cohérents, dans lequel la pluralité de surfaces d'émission (8.1, ..., 8.N) sont agencées dans une grille périodique bidimensionnelle le long d'une première direction (X) et d'une seconde direction (Y), laquelle est perpendiculaire à la première direction (X), ainsi qu'un dispositif (16) pour combiner la pluralité N x M de faisceaux laser (3.1, ..., 3.N) cohérents, lequel comprend au moins (N x M)-1 équipements de réglage de phase (6.1, ..., 6.N) pour régler une phase (δφ_{n,m}) respective de l'un des faisceaux laser (3.1, ..., 3.N) cohérents ainsi qu'un équipement de combinaison de faisceaux (10) pour combiner les faisceaux laser (3.1, ..., 3.N) cohérents pour former au moins un faisceau laser (12 ; 12a, b) combiné,
dans lequel l'équipement de combinaison de faisceaux (10) présente un agencement de microlentilles (11) comportant au moins deux réseaux de microlentilles (17a, b ; 17a-c) agencés l'un derrière l'autre pour former l'au moins un faisceau laser (12, 12a, b) combiné, dans lequel les microlentilles (20a, 20b) d'un réseau de microlentilles (17a, b ; 17a-c) respectif sont respectivement agencées dans une grille périodique bidimensionnelle, **caractérisé en ce que** les faisceaux laser (3.1, ..., 3.N) cohérents et l'agencement de microlentilles (11) satisfont à la condition suivante : $N = {{p}_{x}}^{2} / \left({λ}_{L} {f}_{E , X}\right) ,$ $M = {{p}_{y}}^{2} / \left({λ}_{L} {f}_{E , Y}\right) ,$
dans lequel N est le nombre de faisceaux laser (3.1, ..., 3.N) cohérents le long de la première direction (X), M est le nombre de faisceaux laser (3.1, ..., 3.N) cohérents le long de la seconde direction (Y), pₓ est un écart de grille identique des microlentilles (20a, b ; 20a-c) d'un réseau de microlentilles (17a, b ; 17a-c) respectif dans la première direction (X), p_{y} est un écart de grille identique des microlentilles (20a, b ; 20a-c) d'un réseau de microlentilles (17a, b ; 17a-c) respectif dans la seconde direction (Y), λ_{L} est la longueur d'onde de laser, f_{E,X} est la longueur focale de l'agencement de microlentilles (11) dans la première direction (X) et f_{E,Y} est la longueur focale de l'agencement de microlentilles (11) dans la seconde direction (Y), dans lequel les équipements de réglage de phase (6.1, ..., 6.N) sont conçus pour régler une phase δφ_{n,m} pour le (N x M)-ième faisceau laser (3.1, ..., 3.N) cohérent, laquelle est donnée par : ${δφ}_{n} = - \left(2 π/{λ}_{L}\right) {f}_{E , X} {\left({p}_{n} {λ}_{L}/{p}_{x}\right)}^{2} - \left(2 π/{λ}_{L}\right) {f}_{E , Y} {\left({q}_{m} {λ}_{L}/{p}_{Y}\right)}^{2} ,$
dans lequel s'applique ce qui suit : ${p}_{n} = - \frac{\left(N+1\right)}{2} + n$ ${q}_{m} = - \frac{\left(M+1\right)}{2} + m .$

22. Système laser (1), comprenant :
au moins une source laser (2) pour générer une pluralité N x M de faisceaux laser (3.1, ..., 3.N) cohérents, une pluralité de surfaces d'émission (8.1, ..., 8.N) pour émettre la pluralité de faisceaux laser (3.1, ..., 3.N) cohérents, dans lequel la pluralité de surfaces d'émission (8.1, ..., 8.N) sont agencées dans une grille périodique bidimensionnelle le long d'une première direction (X) et d'une seconde direction (Y), laquelle est perpendiculaire à la première direction (X), ainsi qu'un dispositif (16) pour combiner la pluralité N x M de faisceaux laser (3.1, ..., 3.N) cohérents, lequel comprend au moins (N x M)-1 équipements de réglage de phase (6.1, ..., 6.N) pour régler une phase (δφ_{n,m}) respective de l'un des faisceaux laser (3.1, ..., 3.N) cohérents ainsi qu'un équipement de combinaison de faisceaux (10) pour combiner les faisceaux laser (3.1, ..., 3.N) cohérents pour former au moins un faisceau laser (12 ; 12a, b) combiné,
dans lequel l'équipement de combinaison de faisceaux (10) présente un agencement de microlentilles (11) comportant quatre réseaux de microlentilles (17a-d) agencés les uns derrière les autres pour former l'au moins un faisceau laser (12, 12a, b) combiné, dans lequel les microlentilles (20a, 20c) des premier et troisième réseaux de microlentilles (17a, 17c) sont agencées le long de la première direction (X) et les microlentilles (20b, 20d) des deuxième et
quatrième réseaux de microlentilles (17b, 17d) sont agencées le long de la seconde direction (Y), **caractérisé en ce que** les faisceaux laser (3.1, ..., 3.N) cohérents et l'agencement de microlentilles (11) satisfont à la condition suivante : $N = {{p}_{x}}^{2} / \left({λ}_{L} {f}_{E , x}\right) ,$ $M = {{P}_{y}}^{2} / \left({λ}_{L} {f}_{E , y}\right)$
dans lequel N est le nombre de faisceaux laser (3.1, ..., 3.N) cohérents le long de la première direction (X), M est le nombre de faisceaux laser (3.1, ..., 3.N) cohérents le long de la seconde direction (Y), pₓ est un écart de grille identique des microlentilles (20a, 20c) des premier et troisième réseaux de microlentilles (17a, 17c) dans la première direction (X), p_{y} est un écart de grille identique des microlentilles (20b ; 20d) des deuxième et quatrième réseaux de microlentilles (17b, 17d) dans la seconde direction (Y), λ_{L} est la longueur d'onde de laser, f_{E,X} est la longueur focale de l'agencement de microlentilles (11) dans la première direction (X) et f_{E,Y} est la longueur focale de l'agencement de microlentilles (11) dans la seconde direction (Y), dans lequel les équipements de réglage de phase (6.1, ..., 6.N) sont conçus pour régler pour le (N x M)-ième faisceau laser (3.1, ..., 3.N) cohérent une phase δφ_{n,m}, laquelle est donnée par : ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
dans lequel s'applique ce qui suit : ${p}_{n} = - \frac{\left(N+1\right)}{2} + n ,$ ${q}_{m} = - \frac{\left(M+1\right)}{2} + m .$

23. Procédé de combinaison d'un nombre N, en particulier réglable, de faisceaux laser (3.1, ..., 3.N) cohérents, lesquels on été émis par une pluralité de surfaces d'émission (8.1, ..., 8.N) pour former au moins un faisceau laser (12, 12a, b) combiné, comprenant :
le réglage d'une phase (δφₙ) respective de l'un des faisceaux laser (3.1, ..., 3.N) cohérents dans au moins N-1 équipements de réglage de phase (6.1, ..., 6.N),
**caractérisé par**
le couplage des faisceaux laser (3.1, ..., 3.N) cohérents en un agencement de microlentilles (11), lequel présente au moins deux réseaux de microlentilles (17a, b ; 17a-c) agencés l'un derrière l'autre, dans lequel les microlentilles du réseau de microlentilles (17a, b ; 17a-c) respectif sont agencées dans une direction (X), dans lequel les surfaces d'émission (8.1, ..., 8.N) sont agencées de manière équidistante le long de la direction (X) ou de manière équidistante sur un arc de cercle (25) et dans un plan commun avec les microlentilles d'un réseau de microlentilles respectif, dans lequel une longueur focale f_{E}
de l'agencement de microlentilles (11) est réglée, laquelle satisfait la condition suivante : ${f}_{E} = {p}^{2} / \left({λ}_{L} N\right) ,$
dans lequel p est un écart de grille identique des microlentilles (20a, b ; 20a-c) d'un
réseau de microlentilles (17a, b ; 17a-c) respectif et λ_{L} est la longueur d'onde de laser
le réglage d'une phase δφₙ du N-ième faisceau laser (3.1, ..., 3.N) cohérent, laquelle est donnée par : ${δφ}_{n} = - \left(2 π/{λ}_{L}\right) {f}_{E} {\left({m}_{n} {λ}_{L}/p\right)}^{2} ,$
dans lequel s'applique ce qui suit : ${m}_{n} = - \frac{\left(N+1\right)}{2} + n$.
ainsi que la combinaison des faisceaux laser (3.1, ..., 3.N) cohérents pour former l'au moins un faisceau laser (12, 12a,b) combiné dans l'agencement de microlentilles (11).

24. Procédé selon la revendication 23, selon lequel le couplage est réalisé au moyen d'une
optique de couplage (18), laquelle présente un équipement de focalisation (19), dans lequel le procédé comprend en outre :
le réglage d'un écart L2 entre l'équipement de focalisation (19) et l'agencement de microlentilles (11), lequel est donné par : $L 2 = {f}_{2} - {p}^{2} / \left(N {λ}_{L}\right) ,$
dans lequel f₂ est une longueur focale d l'équipement de focalisation (19).

25. Procédé selon la revendication 23 ou 24, selon lequel le couplage est réalisé au moyen d'une optique de couplage (18), laquelle présente un équipement de focalisation (19) et une optique d'imagerie (21) supplémentaire, dans lequel le procédé comprend en outre :
le réglage d'une longueur focale f1 de l'optique d'imagerie (21) supplémentaire,
laquelle est donnée par : ${f}_{1} = - {{f}_{2}}^{2} / {f}_{E} ,$
dans lequel f₂ est une longueur focale d l'équipement de focalisation (19).

26. Procédé de combinaison d'un nombre N x M, en particulier réglable, de faisceaux laser (3.1, ..., 3.N) cohérents, lesquels ont été émis par une pluralité de surfaces d'émission (8.1, ..., 8.N), dans lequel la pluralité de surfaces d'émission (8.1, ..., 8.N) sont agencées dans une grille périodique bidimensionnelle le long d'une première direction (X) et le long d'une seconde direction (Y), laquelle est perpendiculaire à la première direction (Y), pour former au moins un faisceau laser (12, 12a, b) combiné, comprenant :
le réglage d'une phase (δφ_{n,m}) respective de l'un des faisceaux laser (3.1, ..., 3.N) cohérents dans au moins (N x M)-1 équipements de réglage de phase (6.1, ..., 6.N), **caractérisé par**
le couplage des faisceaux laser (3.1, ..., 3.N) cohérents dans un agencement de microlentilles (11), lequel présente au moins deux réseaux de microlentilles (17a, b ; 17a-c) agencés l'un derrière l'autre, dans lequel les microlentilles (20a, 20b) d'un réseau de microlentilles (17a, b ; 17a-c) respectif sont agencées dans une grille périodique bidimensionnelle, dans lequel une longueur focale f_{E,X} de l'agencement de microlentilles (11) est réglée dans la première direction (X) et une longueur focale f_{E,Y} de l'agencement de microlentilles (11) est réglée dans la seconde direction (Y), lesquelles satisfont aux conditions suivantes : ${f}_{E , X} = {{p}_{X}}^{2} / \left({λ}_{L} N\right) ,$ ${f}_{E , Y} = {{p}_{Y}}^{2} / \left({λ}_{L} M\right) ,$
dans lequel p_{X} est un écart de grille identique des microlentilles (20a, b ; 20a-c) d'un réseau de microlentilles (17a, b ; 17a-c) respectif dans la première direction (X), p_{Y} est un écart de grille identique des microlentilles (20a, b ; 20a-c) d'un réseau de microlentilles (17a, b ; 17a-c) respectif dans la seconde direction (Y), N est le nombre de faisceaux laser (3,1, ..., 3,N) cohérents le long de la première direction (X), M est le nombre de faisceaux laser (3,1, ..., 3,N) cohérents le long de la seconde direction (Y), et λ_{L} est la longueur d'onde de laser, le réglage de la phase δφ_{n,m} du (N x M)-ième faisceau laser (3.1, ..., 3.N) cohérent, laquelle est donnée par : ${δφ}_{n , m} = - \left(2 π/{λ}_{L}\right) {f}_{E , X} {\left({p}_{n} {λ}_{L}/{p}_{Y}\right)}^{2} - \left(2 π/{λ}_{L}\right) {f}_{E , Y} {\left({q}_{m} {λ}_{L}/{p}_{Y}\right)}^{2} ,$
dans lequel s'applique ce qui suit : ${p}_{n} = - \frac{\left(N+1\right)}{2} + n ,$ ${q}_{m} = - \frac{\left(M+1\right)}{2} + m .$
ainsi que la combinaison des faisceaux laser (3.1, ..., 3.N) cohérents pour former l'au moins un faisceau laser (12, 12a,b) combiné dans l'agencement de microlentilles (11).

27. Procédé de combinaison d'un nombre N x M, en particulier réglable, de faisceaux laser (3.1, ..., 3.N) cohérents, lesquels ont été émis par une pluralité de surfaces d'émission (8.1, ..., 8.N), dans lequel la pluralité de surfaces d'émission (8.1, ..., 8.N) sont agencées dans une grille périodique bidimensionnelle le long d'une première direction (X) et d'une seconde direction (Y), laquelle est perpendiculaire à la première direction (X), pour former au moins un
faisceau laser (12, 12a, b) combiné, comprenant :
le réglage d'une phase (δφ_{n,m}) respective de l'un des faisceaux laser (3.1, ..., 3.N) cohérents dans au moins (N x M)-1 équipements de réglage de phase (6.1, ..., 6.N), **caractérisé par**
le couplage des faisceaux laser (3.1, ..., 3.N) cohérents dans un agencement de microlentilles (11), lequel présente quatre réseaux de microlentilles (17a-d) agencés les uns derrière les autres, dans lequel les microlentilles (20a, 20c) des premier et troisième réseaux de microlentilles (17a, 17c) sont agencées le long de la première direction (X) et les microlentilles (20b, 20d) des deuxième et quatrième réseaux de microlentilles (17b, 17d) sont agencées le long de la seconde direction (Y), dans lequel une longueur focale f_{E,X} de
l'agencement de microlentilles (11) est réglée dans la première direction (X) et une longueur focale f_{E,Y} de l'agencement de microlentilles (11) est réglée dans la seconde direction (Y), lesquelles satisfont aux conditions suivantes : ${f}_{E , X} = {{p}_{X}}^{2} / \left({λ}_{L} N\right) ,$ ${f}_{E , Y} = {{p}_{Y}}^{2} / \left({λ}_{L} M\right) ,$
dans lequel p_{X} est un écart de grille identique des microlentilles (20a, 20c) des premier et troisième réseaux de microlentilles (17a, 17c) dans la première direction (X), p_{Y} est un écart de grille identique des microlentilles (20b ; 20d) des deuxième et quatrième réseaux de microlentilles (17b, 17d) dans la seconde direction (Y), N est le nombre de faisceaux laser (3,1, ..., 3,N) cohérents le long de la première direction (X), M est le nombre de faisceaux laser (3,1, ..., 3,N) cohérents le long de la seconde direction (Y) et λ_{L} est la longueur d'onde de laser, le réglage de la phase δφ_{n,m} du (N x M)-ième faisceau laser (3.1, ..., 3.N) cohérent, laquelle est donnée par : ${δφ}_{n , m} = - \left(2 π/{λ}_{L}\right) {f}_{E , X} {\left({p}_{n} {λ}_{L}/{p}_{X}\right)}^{2} - \left(2 π/{λ}_{L}\right) {f}_{E , Y} {\left({q}_{m} {λ}_{L}/{p}_{Y}\right)}^{2} ,$
dans lequel s'applique ce qui suit : ${p}_{n} = - \frac{\left(N+1\right)}{2} + n ,$ ${q}_{m} = - \frac{\left(M+1\right)}{2} + m ,$
ainsi que la combinaison des faisceaux laser (3.1, ..., 3.N) cohérents pour former l'au moins un faisceau laser (12, 12a,b) combiné dans l'agencement de microlentilles (11).
